(19) Europäisches Patentamt
European Patent Office
Office européen des brevets

(11) EP 3 503 274 B1

(12) **FASCICULE DE BREVET EUROPEEN**

(45) Date de publication et mention de la délivrance du brevet:
**13.05.2020 Bulletin 2020/20**

(21) Numéro de dépôt: **18209845.9**

(22) Date de dépôt: **03.12.2018**

(51) Int Cl.:
***H01M 8/0432*** *(2016.01)* ***B60L 50/50*** *(2019.01)*
***H01M 8/0438*** *(2016.01)* ***H01M 8/04537*** *(2016.01)*
***H01M 8/04664*** *(2016.01)* ***B60L 3/00*** *(2019.01)*
***B60L 58/30*** *(2019.01)*

(54) **METHODE POUR ESTIMER L'ETAT DE SANTE D'UNE PILE A COMBUSTIBLE A PARTIR DE MESURES EN USAGE REEL**

VERFAHREN ZUR BESTIMMUNG DES GESUNDHEITSZUSTANDS EINER BRENNSTOFFZELLE UNTER VERWENDUNG VON MESSUNGEN WÄHREND DER BENUTZUNG

METHOD FOR DETERMINING THE HEALTH OF A FUEL CELL USING MEASUREMENTS DURING REAL USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2017 FR 1761893**

(43) Date de publication de la demande:
**26.06.2019 Bulletin 2019/26**

(73) Titulaire: **Commissariat à l'Energie Atomique et aux Energies Alternatives**
**75015 Paris (FR)**

(72) Inventeurs:
- **GRANDJACQUES, Mathilde**
  **74170 SAINT GERVAIS LES BAINS (FR)**
- **GERARD, Mathias**
  **38100 GRENOBLE (FR)**
- **SERRE, Guillaume**
  **38430 SAINT JEAN DE MOIRANS (FR)**
- **SUARD, Frédéric**
  **73000 JACOB BELLECOMBETTE (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**FR-A1- 2 942 545** **US-A1- 2010 015 474**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 503 274 B1

## Description

L'invention concerne le domaine des piles à combustible pour alimenter des véhicules électriques, notamment des voitures électriques ou hybrides. L'invention porte plus précisément sur une méthode pour estimer l'état de santé ou le vieillissement d'une pile à combustible en usage réel dans un environnement non-contrôlé, c'est-à-dire à partir de mesures réalisées sur une pile à combustible dans un véhicule électrique en fonctionnement.

Un objectif général de l'invention est de permettre une estimation du vieillissement ou de l'état de santé d'une pile à combustible, de manière non intrusive, c'est-à-dire sans extraire la pile à combustible du véhicule pour l'analyser sur un banc de test et sans procéder à son démontage ce qui peut conduire à sa destruction. Le vieillissement d'une pile à combustible comprend les phénomènes de dégradation de la pile induit par différents mécanismes physiques et chimiques internes à celle-ci. Les vitesses de dégradations dépendent des propriétés des matériaux utilisés pour fabriquer la pile et des conditions locales qui dépendent aussi des conditions opératoires à la pile. Le vieillissement se manifeste entre autre par une baisse du potentiel pour un courant ou une densité de courant donné et par une baisse du rendement c'est-à-dire de la puissance électrique produite rapportée à la consommation d'hydrogène.

Ce vieillissement se produit lorsque la pile est en fonctionnement et il n'est pas régulier. L'horloge du vieillissement correspond à un nombre d'heures de fonctionnement de la pile et n'est pas forcément liée au temps calendaire. Cependant, pour des raisons pratiques on peut prendre en compte le temps calendaire, par exemple le nombre de mois écoulés lors de l'utilisation du véhicule. La vitesse de vieillissement peut donc varier d'un mois à l'autre car la durée de fonctionnement de la pile n'est pas forcément la même tous les mois et les mécanismes de vieillissement peuvent être irréguliers dans le temps.

Les méthodes permettant d'analyser le vieillissement d'une pile à combustible consistent, par exemple, à mesurer des courbes de polarisation de la pile sur un banc de test. Dans ce contexte, l'environnement de la pile est contrôlé, c'est-à-dire que les paramètres physiques qui influent sur le comportement de la pile, tels que la température, l'hygrométrie, la pression de l'air et le débit d'air, sont maitrisés. Les courbes de polarisation sont mesurées pour des plages de valeurs de courant et de tension qui sont également maitrisées et prédéfinies. De façon générale, l'analyse d'une pile à combustible à l'aide d'un banc de test permet de caractériser précisément et finement son comportement car tous les paramètres ayant une incidence sur le fonctionnement de la pile peuvent être contrôlés pour balayer des plages de valeurs prédéterminées à l'avance. Les références [1] et [2] décrivent des exemples de méthodes d'analyse sur banc de test.

Un inconvénient à l'utilisation d'un banc de test est qu'il nécessite d'extraire la pile à combustible du véhicule pour l'analyser et par conséquent d'interrompre le fonctionnement du véhicule. Si l'on souhaite au contraire détecter un vieillissement de la pile à combustible à bord du véhicule sans imposer une maintenance du véhicule, l'utilisation d'un banc de test n'est pas possible.

D'autres solutions existantes impliquent de démonter la pile pour examiner optiquement ses composants internes. Cette méthode nécessite aussi d'extraire la pile du véhicule pour l'analyser et présente en outre l'inconvénient majeur d'un risque de destruction de la pile.

L'invention porte sur une méthode d'estimation du vieillissement d'une pile à combustible en usage réel, dans un environnement non contrôlé, c'est-à-dire sans nécessité de démonter la pile à combustible du véhicule. Des mesures sont réalisées sur certains paramètres de la pile à bord du véhicule et transmises directement à un organe de contrôle en charge d'analyser les mesures et d'en déduire un indicateur du vieillissement de la pile.

Un avantage de l'invention est la capacité de détecter une dégradation de la pile à combustible sans nécessiter une maintenance du véhicule. Par ailleurs, l'instrumentation utilisée pour réaliser des mesures sur la pile à bord du véhicule est, le plus souvent, déjà prévue par le constructeur de la pile pour la gestion intrinsèque de la pile. Ainsi, l'invention ne nécessite pas d'instrumentation spécifique.

L'invention a pour objet une méthode, mise en œuvre par ordinateur, pour estimer l'état de santé d'une pile à combustible embarquée dans un véhicule en fonctionnement et comprenant une pluralité de cellules, la dite méthode comprenant les étapes de :

- Recevoir une pluralité d'ensembles de groupes de mesures réalisées au cours d'une pluralité d'intervalles temporels successifs respectifs à bord d'un véhicule en fonctionnement, chaque groupe de mesures comprenant au moins une mesure de la tension aux bornes d'au moins une cellule de la pile à combustible, une mesure du courant ou de la densité de courant traversant au moins une cellule de la pile à combustible et une mesure d'au moins une grandeur physique parmi la température, le débit d'air, la pression d'air dans au moins une cellule de la pile à combustible,
- pour chaque ensemble de groupes de mesures reçues associé à un intervalle temporel courant,
    - déterminer une répartition des valeurs des couples de mesures (tension, courant) ou (tension, densité de courant),

- calculer au moins une distance entre ladite répartition et au moins une répartition de valeurs de référence ou entre ladite répartition et au moins une répartition déterminée pour un autre intervalle temporel que l'intervalle temporel courant,

- déterminer un indicateur de l'état de santé de la pile à combustible à partir d'au moins une distance calculée.

Selon un mode de réalisation particulier, la méthode selon l'invention comprend en outre une étape de filtrage de l'ensemble des mesures reçues de manière à supprimer les groupes de mesures réalisées pendant au moins une phase d'arrêt du véhicule et/ou pendant au moins une phase de démarrage du véhicule.

Selon un mode de réalisation particulier, la méthode selon l'invention comprend en outre une étape de filtrage de l'ensemble des mesures reçues de manière à conserver uniquement les groupes de mesures pour lesquels au moins une mesure d'au moins une grandeur physique est comprise dans au moins un intervalle prédéterminé.

Selon un mode de réalisation particulier, la méthode selon l'invention comprend en outre une étape de détermination, pour chaque ensemble de groupes de mesures reçues, d'un modèle numérique de la répartition des valeurs des couples de mesures (tension, courant) ou (tension, densité de courant).

Selon un aspect particulier de l'invention, ledit modèle numérique est obtenu par estimation de la fonction de répartition des valeurs desdits couples de mesures selon une loi de probabilité prédéterminée.

Selon un aspect particulier de l'invention, la distance calculée est égale au maximum des valeurs absolues des différences entre les valeurs respectives des modèles numériques correspondants à deux répartitions déterminées pour deux ensembles différents de groupes de mesures associés à deux intervalles temporels distincts.

Selon un mode de réalisation particulier de l'invention, la distance calculée est une distance de Wasserstein.

Selon un mode de réalisation particulier, la méthode selon l'invention comprend en outre une étape de construction, pour chaque ensemble de groupes de mesures reçues, d'une courbe de polarisation (courant, tension) ou (densité de courant, tension) à partir de la répartition des valeurs des couples de mesures, ladite au moins une distance étant calculée entre ladite courbe de polarisation et au moins une courbe de polarisation de référence ou au moins une courbe de polarisation déterminée pour un autre intervalle temporel.

Selon un aspect particulier de l'invention, ladite courbe de polarisation est construite en calculant la moyenne des courants ou des densités de courant pour chaque valeur de tension, ou en calculant la moyenne des tensions pour chaque valeur de courant ou densité de courant ou en appliquant une régression linéaire polynômiale aux valeurs des couples de mesures.

Selon un mode de réalisation particulier, la méthode selon l'invention comprend le calcul de toutes les distances entre deux répartitions de valeurs correspondants à deux intervalles temporels distincts et la génération d'une représentation graphique d'au moins une partie des distances calculées.

Selon un mode de réalisation particulier, la méthode selon l'invention comprend la génération d'une représentation graphique des distances entre deux répartitions de valeurs correspondant à deux intervalles temporels consécutifs.

Selon un mode de réalisation particulier, la méthode selon l'invention comprend, pour chaque ensemble de groupes de mesures reçues, le calcul d'une première distance entre ladite répartition de valeurs et une répartition de valeurs de référence correspondant à des valeurs limites de fonctionnement de la pile à combustible et le calcul d'une seconde distance entre ladite répartition de valeurs et une répartition de valeurs correspondant à un intervalle temporel initial.

Selon un mode de réalisation particulier, la méthode selon l'invention comprend la génération d'une représentation graphique de la première distance et de la seconde distance, en fonction du temps.

Selon un mode de réalisation particulier, la méthode selon l'invention comprend en outre une étape d'affichage d'au moins une représentation graphique générée sur une interface visuelle.

Selon un mode de réalisation particulier, la méthode selon l'invention comprend en outre une étape de détermination d'une vitesse de dégradation de la pile à combustible à partir d'au moins une distance calculée entre deux répartitions de valeurs mesurées à deux instants différents.

Selon un mode de réalisation particulier, la méthode selon l'invention comprend en outre une étape de détermination du temps restant avant fin de vie de la pile à combustible à partir de la vitesse de dégradation et d'une distance calculée entre une répartition de valeurs mesurée à un instant courant et un seuil de fin de vie prédéterminé.

Selon un mode de réalisation particulier, la méthode selon l'invention comprend comprenant en outre la comparaison d'au moins une distance calculée à un seuil d'alerte et le déclenchement d'une alerte en fonction du résultat de la comparaison.

L'invention a aussi pour objet un programme d'ordinateur comportant des instructions pour l'exécution de la méthode pour estimer l'état de santé d'une pile à combustible selon l'invention, lorsque le programme est exécuté par un processeur.

L'invention a aussi pour objet un support d'enregistrement lisible par un processeur sur lequel est enregistré un programme comportant des instructions pour l'exécution de la méthode pour estimer l'état de santé d'une pile à combustible selon l'invention, lorsque le programme est exécuté par un processeur.

L'invention a aussi pour objet un système pour estimer l'état de santé d'une pile à combustible, comprenant une pile à combustible destinée à être embarquée dans un véhicule en fonctionnement, un dispositif de mesure de la tension aux bornes d'au moins une cellule de la pile à combustible, un dispositif de mesure du courant ou de la densité de courant traversant au moins une cellule de la pile à combustible et un dispositif de mesure d'au moins une grandeur physique parmi la température, le débit d'air, la pression d'air dans au moins une cellule de la pile à combustible, un transmetteur pour transmettre, depuis ledit véhicule, les mesures réalisées à des instants successifs par au moins l'un des dispositifs de mesure, un calculateur et une mémoire pour recevoir les mesures réalisées et exécuter la méthode pour estimer l'état de santé d'une pile à combustible selon l'invention.

Dans un mode de réalisation particulier, le système selon l'invention comprend en outre une interface visuelle pour afficher au moins une représentation graphique générée par le calculateur.

D'autres caractéristiques et avantages de la présente invention apparaîtront mieux à la lecture de la description qui suit en relation aux dessins annexés qui représentent :

- La figure 1, un schéma d'une pile à combustible,
- La figure 2, un schéma d'une pile à combustible équipée de capteurs pour réaliser des mesures,
- La figure 3, un diagramme sur lequel sont représentées plusieurs courbes de polarisation d'une pile à combustible,
- La figure 4, un organigramme décrivant les étapes de mise en œuvre d'une méthode d'estimation de l'état de santé d'une pile à combustible, selon l'invention,
- La figure 5, un diagramme temporel illustrant une étape de la méthode selon l'invention,
- La figure 6, un exemple de répartition de couples de mesures (tension, courant),
- Les figures 7a-7c, trois représentations différentes d'un indicateur de l'état de santé d'une pile à combustible produit par la méthode selon l'invention,
- La figure 8, un diagramme (tension, densité de courant) illustrant une étape particulière de la méthode selon l'invention,
- La figure 9, une représentation graphique d'un autre indicateur de l'état de santé d'une pile à combustible produit par la méthode selon l'invention,
- Les figures 10a-10d, quatre diagrammes illustrant la création de courbes de polarisation à partir de mesures réalisées en usage réel.

La figure 1 représente, sur un schéma, une pile à combustible PAC composée de plusieurs cellules C montées en série. Chaque cellule comprend une membrane MEM disposée entre deux plaques bipolaires PB1, PB2. A chaque extrémité opposée de la pile à combustible, une plaque monopolaire PM1, PM2 est pourvue de canaux CD de distribution d'hydrogène et d'oxygène pour alimenter la pile.

Sur la droite de la figure 1, on a représenté une seule cellule élémentaire C de la pile à combustible PAC. Une cellule C comprend les éléments suivants agencés en série : une première plaque bipolaire PB1, un premier support S1, un premier catalyseur CAT1, une membrane MEM, un second catalyseur CAT2, un second support S2, une seconde plaque bipolaire PB2.

Une pile à combustible PAC est soumise à une dégradation au cours du temps principalement du fait de la dégradation des membranes MEM.

L'ensemble des cellules de la pile à combustible PAC est traversé par un même courant, cependant la densité locale de courant peut ne pas être uniforme dans une cellule et peut avoir une répartition spatiale différente d'une cellule à l'autre du fait de la dégradation potentielle des membranes MEM au cours du temps.

La figure 2 schématise un dispositif comprenant une pile à combustible équipée de capteurs et associée à un transmetteur, pour mettre en œuvre l'invention.

Le dispositif 200 comporte une pile à combustible PAC, du type de celle décrite à la figure 1. La pile PAC est alimentée d'une part en hydrogène par un réservoir 201 et d'autre part en air par un canal de distribution 202. L'air traverse un compresseur 203 et un humidificateur 204 pour apporter de l'oxygène, à la pression et l'humidité requises, à la pile PAC.

Le dispositif 200 est pourvu de plusieurs capteurs pour mesurer plusieurs grandeurs physiques caractéristiques du fonctionnement de la pile à combustible PAC. Ainsi, un instrument de mesure du courant 210, par exemple un ampèremètre, est disposé en sortie de la pile à combustible PAC pour mesurer le courant I traversant la pile. Un instrument de mesure de la tension 211 est disposé aux bornes de la pile à combustible PAC pour mesurer la tension U aux bornes de la pile. Dans un mode de réalisation particulier de l'invention, la tension peut aussi être mesurée aux bornes d'une ou de plusieurs cellule(s) de la pile.

Le dispositif comprend en outre au moins un capteur supplémentaire de mesure d'une grandeur physique parmi la température, le débit d'air ou la pression de l'air. Un instrument de mesure de la température, tel qu'un thermomètre 220, est disposé à proximité de la pile PAC ou d'une cellule de la pile. Un instrument de mesure de la pression de l'air, tel qu'un baromètre 230, est disposé au niveau de l'arrivée d'oxygène de la pile PAC. Un instrument de mesure du débit d'air entrant, tel qu'un débitmètre 240, est disposé entre le compresseur 203 et l'humidificateur 204.

Les mesures sont réalisées par les différents capteurs à instants réguliers et sont fournies à un transmetteur TR apte à transmettre les mesures à un organe de contrôle distant configuré pour exécuter la méthode d'estimation de l'état de santé de la pile, selon l'invention.

La figure 3 représente plusieurs courbes de polarisation d'une pile à combustible, les courbes étant réalisées sur banc de test selon une méthodologie connue. Une courbe de polarisation d'une pile à combustible est une courbe de la tension aux bornes de la pile (ou d'une cellule de la pile) en fonction de la densité de courant traversant la pile (ou une cellule de la pile). Les différentes courbes sont mesurées à l'issue d'une durée de fonctionnement de la pile (ou d'une cellule de la pile) qui est différente pour chaque courbe et indiquée dans la légende. Par exemple, la courbe 301 correspond à une mesure initiale d'une courbe de polarisation, tandis que la courbe 302 correspond à une mesure sur la même pile à combustible mais réalisée au bout de 2000 heures de fonctionnement.

L'analyse des courbes de polarisation à différents instants de la durée de vie d'une pile à combustible permet de caractériser le vieillissement de la pile par une baisse de la tension pour la même valeur de densité de courant ou inversement.

Les courbes de polarisation sont habituellement obtenues sur un banc de test et dans des conditions opératoires maitrisées. Les grandeurs physiques qui sont maitrisées sont la pression, la température, l'humidité relative, le débit d'air, le débit d'hydrogène ou encore la stœchiométrie. La stœchiométrie d'une pile à combustible est définie comme le rapport du débit d'alimentation au débit nécessaire pour produire un courant électrique donné. Les stœchiométries d'air/oxygène et d'hydrogène peuvent être différentes. Définir la stœchiométrie est ainsi équivalent à définir le débit. Pour des conditions opératoires maitrisées, c'est-à-dire des conditions connues, il est possible de comparer précisément l'évolution des performances de la pile à deux instants différents de sa vie, séparés par une certaine durée de fonctionnement.

Sur banc de test, avant chaque série de caractérisation, la pile à combustible est conditionnée suivant un mode opératoire donné et identique d'une caractérisation à l'autre. Avant de commencer un test pour générer une courbe de polarisation, il est généralement conseillé de faire fonctionner la pile à l'état stationnaire pendant un temps prédéterminé afin d'éviter autant que possible que son mode de fonctionnement précédent ne perturbe la mesure de caractérisation. En pratique, la procédure adoptée consiste à faire fonctionner la pile dans les mêmes conditions opératoires, par exemple avec un courant égal à 50A, une stœchiométrie anode/cathode égale à 1.5/2, une température de 55°C pendant une durée prédéterminée, avant chaque séquence de caractérisation.

Au cours de chaque caractérisation, plusieurs courbes de polarisation sont enregistrées consécutivement, pour des ensembles différents de conditions opératoires. Ces courbes de polarisation sont obtenues en incrémentant ou en décrémentant le courant par paliers successifs entre les valeurs minimum et maximum admissibles. Avant chaque acquisition de courant, les débits de gaz nécessaires sont calculés pour correspondre aux taux de stœchiométrie définis et sont fournis à la pile pendant une certaine période afin d'obtenir les mêmes conditions d'expérience. La pile fourni un courant pendant un certain lapse de temps qui est enregistré. A la fin de cette étape d'acquisition, les flux de gaz sont préparés à nouveau pour la prochaine période d'acquisition. Tous les paramètres temporels liés à la procédure d'établissement de courbes de polarisation peuvent être spécifiés via une interface dédiée permettant la réalisation automatique de certains tests de courbes de polarisation. Les tests sont arrêtés lorsque le courant ou la tension dépasse une valeur seuil, caractéristique de la limite de fonctionnement de la pile.

La mesure de courbes de polarisation sur banc de test est une opération contraignante car, d'une part elle nécessite d'extraire la pile à combustible du véhicule pour l'analyser sur banc de test pendant une durée importante et d'autre part, la procédure d'analyse est très méthodique car elle requiert des conditions opératoires précises et contraignantes en terme de stabilité et d'échantillonnage. En effet, les grandeurs physiques qui influent sur le comportement de la pile, telles que, par exemple, la température, la pression de l'air, le débit d'air et l'humidité doivent être stables. Par ailleurs, les mesures en courant et tension doivent être réalisées avec un échantillonnage régulier.

L'invention propose une nouvelle méthode d'analyse de l'état de santé d'une pile à combustible qui permet de s'affranchir de l'utilisation d'un banc de test en exploitant des mesures réalisées sur la pile en fonctionnement dans un véhicule en roulage. Avec cette méthode, il n'est plus nécessaire de réaliser une acquisition régulière et codifiée des mesures sur banc de test ni de maintenir des conditions expérimentales constantes.

La figure 4 schématise sur un organigramme, les étapes de mise en œuvre de la méthode selon l'invention. La méthode est mise en œuvre au moyen du dispositif 200 de la figure 2.

Dans une première étape 401, un ensemble de mesures est réalisé sur la pile à combustible PAC à bord du véhicule en fonctionnement, c'est à dire en roulage ou à l'arrêt, à l'aide des différents capteurs 210, 211, 220, 230, 240 qui instrumentent la pile. Les mesures sont réalisées temporellement, à une fréquence de mesure prédéterminée. Les mesures effectuées sont analysées à l'expiration d'un intervalle temporel prédéterminé, par exemple tous les mois. Préférentiellement, l'intervalle de temps est régulier afin de pouvoir comparer les analyses réalisées entre elles. L'intervalle de temps dépend de la fréquence d'utilisation de la pile à combustible. Il faut que la pile à combustible soit sollicitée suffisamment pour pouvoir observer une dégradation. Il faut également que le nombre de mesures soit suffisamment représentatif du fonctionnement de la pile.

Au sein de l'intervalle de temps de mesure, il n'est pas obligatoire que les mesures soient échantillonnées régulièrement. De plus, il n'est pas nécessaire que les phases d'arrêt du véhicule ou de démarrage du véhicule soient effectuées toujours aux mêmes instants sur deux intervalles de temps différents.

Chaque groupe de mesures réalisé à un instant donné comprend une mesure fournie par chacun des capteurs disposés au sein du dispositif 200. Le groupe de mesures comprend au moins une mesure de tension et de courant ou de densité de courant, aux bornes de la pile ou d'une cellule de la pile. Le groupe de mesures comprend aussi une mesure de température et/ou une mesure de débit d'air et/ou une mesure de pression de l'air et/ou une mesure du taux d'humidité des gaz. La température peut être mesurée au niveau de la sortie d'air ou de la sortie d'eau ou de l'air ambiant. La pression peut être mesurée au niveau de l'arrivée d'hydrogène ou de l'air ambiant.

Les mesures sont transmises à un organe de contrôle soit via le transmetteur TR qui peut enregistrer les mesures sur un serveur, soit en récupérant les mesures sauvegardées dans le véhicule via un support de stockage.

Une différence principale entre les conditions de fonctionnement d'une pile à combustible sur un banc de test et dans un véhicule en roulage est que dans le premier cas, les conditions de fonctionnement de la pile et les grandeurs physiques qui influent sur le fonctionnement de la pile sont contrôlées, tandis que dans le second cas, elles dépendent de l'utilisation du véhicule et peuvent donc varier.

Afin de ne conserver que les phases de fonctionnement du véhicule qui sont représentatives du fonctionnement de la pile à combustible, la méthode selon l'invention, comprend une première étape de filtrage 402 pour éliminer les mesures correspondant à des phases d'arrêt et de démarrage du véhicule et ne conserver que le régime nominal, correspondant aux phases de roulage du véhicule.

La figure 5 illustre, sur un diagramme représentant la tension et le courant mesurés au cours d'un intervalle temporel, les phases d'arrêt 500 du véhicule et une phase de démarrage 501 du véhicule. L'étape 402 de filtrage consiste à ne conserver que les mesures correspondant au régime nominal 502 de fonctionnement du véhicule, et donc de la pile.

Ensuite, afin de se ramener à des conditions de fonctionnement proches des conditions obtenues sur un banc de test, une seconde étape de filtrage 403 est opérée sur les mesures des grandeurs physiques qui influent sur le fonctionnement de la pile parmi lesquelles la température, la pression d'air et le débit d'air. Afin de se replacer dans des conditions opératoires régulières similaires à celles obtenues sur un banc de test, et pour pouvoir réaliser des comparaisons au cours du temps, les mesures sont filtrées en conservant uniquement celles qui correspondent à des plages de température et/ou des plages de débit d'air et/ou des plages de pression d'air prédéterminées.

Par exemple, la plage de température peut être choisie égale à [60°C ; 70°C] et la plage de débit d'air peut être choisie égale à [20000 $m^3.s^{-1}$ ; 25000 $m^3.s^{-1}$].

Le filtrage peut être opéré sur une ou plusieurs des grandeurs physiques précitées.

Le choix des plages de filtrage réside dans un compromis entre le nombre de points de mesure d'une part et la précision de la définition des courbes obtenues à partir des mesures d'autre part.

Dans un mode de réalisation particulier de l'invention, l'une ou l'autre des étapes de filtrage 402, 403 peuvent être omises si le dispositif à bord du véhicule permet de ne déclencher les mesures que pendant les phases de roulage par exemple, ou pendant les phases de pleine puissance de la pile à combustible.

Les mesures obtenues pour un intervalle temporel donné correspondent à des nuages de points lorsqu'on les représente dans le domaine (tension, courant). A partir des mesures obtenues, on détermine ensuite 404 une répartition des couples de mesure (tension, courant) ou (tension, densité de courant). La figure 6 représente un exemple de répartition de couples de mesure (tension, courant) pour un ensemble de mesures réalisées. Un même couple de valeurs peut avoir une occurrence d'apparition plus ou moins importante comme on le voit sur la figure 6.

Ainsi, contrairement au cas d'un banc de test pour lequel les conditions de variation de courant ou de tension sont maitrisées, permettant de produire des courbes de polarisation pour différentes conditions de fonctionnement de la pile, les mesures réalisées en usage réel correspondent à des nuages de points en deux dimensions et non plus à des courbes de polarisation.

L'invention est basée sur l'hypothèse que la caractérisation de courbe de polarisation d'une pile à combustible obtenue en usage réel est représentée par un nuage de points qui peut s'apparenter à une densité de probabilité à deux dimensions.

Pour chaque intervalle temporel associé à un ensemble de groupes de mesures reçues, les répartitions des couples de valeurs (tension, courant) ou (tension, densité de courant) sont comparées en calculant 405 un écart ou une distance entre ces deux répartitions. La distance calculée est caractéristique de la ressemblance ou de la dissemblance des deux groupes de mesures. Son évolution dans le temps permet de caractériser l'évolution de l'état de santé de la pile à combustible et de fournir un indicateur 406 de l'état de santé ou de la vitesse de dégradation de la pile.

On décrit à présent un exemple de réalisation des étapes 404-406 de la méthode selon l'invention. Sans sortir du cadre de l'invention, les couples de valeurs (tension, courant) peuvent être remplacés par des couples de valeurs (tension, densité de courant).

Selon cet exemple, une répartition de couples de valeurs (tension, courant) est déterminée à l'étape 404 en appliquant un modèle numérique de cette répartition.

Un modèle numérique possible consiste à prendre l'hypothèse que la densité de probabilité f(x) des couples de valeurs x= (tension, courant) est modélisable par un mélange de fonctions Gaussiennes.

Par exemple, la densité de probabilité f(x) peut être égale à une somme pondérée de plusieurs fonctions Gaussiennes, par exemple une somme de deux fonctions Gaussiennes.

Ainsi, on a $f(x) = \mu_1 f_1(x;\theta_1) + \mu_2 f_2(x;\theta_2)$ où $f_1$ et $f_2$ sont des lois de probabilité Gaussiennes de paramètres $\theta_1 = (m_1,\Sigma_1)$ et $\theta_2 = (m_2,\Sigma_2)$, correspondant à la moyenne et la variance de la loi de probabilité.

$$\begin{cases} f_1(x;\theta_1) = \dfrac{1}{2\pi|\Sigma_1|^{1/2}}\exp(-\dfrac{1}{2}(x-m_1)^t\Sigma_1^{-1}(x-m_1)) \\ f_2(x;\theta_2) = \dfrac{1}{2\pi|\Sigma_2|^{1/2}}\exp(-\dfrac{1}{2}(x-m_2)^t\Sigma_2^{-1}(x-m_2)) \end{cases}$$

La fonction de répartition F(x) est égale à l'intégrale de la densité de probabilité f(x).

A partir d'un ensemble de valeurs de x mesurées sur un intervalle temporel donné, on identifie les paramètres de la fonction f(x) à l'aide d'algorithmes de résolution numérique. Les facteurs de pondération $\mu_j$ sont, par exemple, estimés au moyen d'un algorithme du maximum de vraisemblance ou d'un algorithme d'espérance-maximisation tel que décrit dans les références [3] et [4]. La moyenne et la variance de chaque fonction Gaussienne peuvent ensuite être estimées directement à partir des mesures de x, par identification.

Une fois les paramètres du modèle numérique f(x) estimés, on en déduit, par intégration, la fonction de répartition F(x). Selon un mode de réalisation particulier, lorsque les paramètres de la fonction f(x) sont calculés, les mesures initiales ne sont plus sauvegardées puisque seuls les paramètres numériques du modèle f(x) suffisent ensuite pour calculer une distance entre deux groupes de mesures. Un avantage à cet aspect de l'invention est que cela permet de limiter la quantité de données à conserver en mémoire.

Ensuite, dans l'étape 405, on calcule une distance D(F,G) entre deux fonctions de répartition F et G estimées pour des groupes de mesures respectivement réalisées à deux intervalles temporels distincts.

Un exemple possible de distance est la distance de Kolmogorov Smirnov qui consiste à calculer le maximum de la valeur absolue des différences point à point entre deux fonctions de répartition :

$$\mathrm{D(F,G)} = \max_{\mathrm{x}} |\mathrm{F(x)} - \mathrm{G(x)}|$$

Elle permet de rendre compte de l'écart maximum entre les deux répartitions et donc de l'ajustement entre celles-ci. Comprise entre 0 et 1, elle donne une indication de la « proportion » d'adéquation entre les lois.

Sans sortir du cadre de l'invention, n'importe quelle distance permettant de quantifier la proximité entre deux répartitions peut être envisagée. La distance peut aussi être calculée sur une sous partie de l'espace des valeurs de x, par exemple en se limitant à un intervalle de valeurs de tension.

Dans un mode de réalisation particulier de l'invention, la distance utilisée est la distance de Wasserstein. Cette distance présente l'avantage de ne pas être bornée. Ainsi, cette distance augmente continuellement avec l'éloignement entre deux fonctions de répartition associées à deux groupes de mesures. Au contraire, la distance de Kolmogorov tend vers 1 lorsque l'éloignement entre deux fonctions de répartition augmente. La distance de Wasserstein est, par exemple, introduite dans le document de référence [5].

La distance de Wasserstein est une distance utilisée pour résoudre un problème de transport optimal. Ce problème consiste à trouver le chemin minimal qui permet la transformation d'un premier nuage de points en un second nuage de points avec un minimum d'effort.

Le coût de transport de chaque point d'un nuage, d'un point de vue spatial se traduit par la distance spatiale :

$$c(X,Y) = ||X-Y||^p$$

En plus de la notion de distance spatiale, on ajoute la notion d'effort. C'est-à-dire que chaque point du nuage possède une certaine masse. Cela se traduit mathématiquement par une densité de probabilité des ensembles de points $(X_i)_{i \in N}$ et $(Y_i)_{i \in N}$.

$$f(X) = \int \gamma(X, Y)dY$$

$$g(Y) = \int \gamma(X, Y)dX$$

Avec y la densité de probabilité jointe de X et Y.

L'objectif est donc de trouver le chemin qui minimise le transport de ces masses pour un coût de transport minimal.

La distance de Wasserstein d'ordre p peut donc être définie à l'aide de la relation suivante :

$$W^p(f, g) = \min_{\gamma} \int \int ||X - Y||^p \gamma(X, Y) dX dY$$

La distance de Wasserstein est, par exemple, calculée à l'ordre p=1 ou 2. Elle peut être calculée à l'aide d'un algorithme de résolution numérique.

Par la suite, on note $W_{i-1,i}$ la distance de Wasserstein entre deux fonctions de répartitions calculées pour deux groupes de mesures réalisés à deux instants i-1 et i.

Dans un mode de réalisation particulier de l'invention, on détermine la part de transformation et la part de déplacement entre deux fonctions de répartitions.

Pour cela, on introduit un nuage de points « virtuel » référencé par l'indice i-1' qui correspond au nuage de points mesurés à l'instant i-1 et translaté vers une position de moyenne identique au nuage de points mesuré à l'instant i. On note $W_{i-1',i-1}$, la distance entre le nuage de points mesurés à l'instant i-1 et le nuage de points « virtuel » et $W_{i-1',i}$, la distance entre le nuage de points mesurés à l'instant i et le nuage de points « virtuel ».

La part de déplacement entre les nuages de points mesurés aux instants respectifs i-1 et i est donnée par la relation :

$$P_{dep} = \frac{W_{(i-1)',(i-1)}}{W_{(i-1)',(i-1)} + W_{(i-1)',i}}$$

La part de transformation entre les nuages de points mesurés aux instants respectifs i-1 et i est donnée par la relation :

$$P_{tr} = \frac{W_{(i-1)',i}}{W_{(i-1)',(i-1)} + W_{(i-1)',i}}$$

La somme des distances $W_{i-1',i-1}$ et $W_{i-1',i,}$ n'est pas toujours égale à $W_{i-1,i}$. En effet, la distance de Wasserstein étant une métrique, elle vérifie l'inégalité triangulaire :

$$W_{(i-1),i} \leq W_{(i-1),(i-1)'} + W_{(i-1)',i}$$

Afin de fournir un indicateur 406 de l'état de santé de la pile à combustible au cours du temps, une distance est calculée entre tous les groupes de mesures pris deux à deux. Par exemple, si les mesures sont réalisées tous les mois, on calcule les distances respectives entre tous les couples de répartitions de valeurs associées à deux mois différents, consécutifs ou non. On crée ainsi une matrice de distance permettant de comparer précisément l'évolution de la proximité entre deux répartitions pour deux mois quelconques différents. Un exemple d'une telle matrice est représenté à la figure 7a.

La figure 7b représente la matrice de la figure 7a sous une forme graphique. Sur les graphiques 701, les tracés situés en dessous de la diagonale de la matrice correspondent à l'état courant de la pile par rapport à son état dans le passé. Sur les graphiques 702, les tracés situés au-dessus de la diagonale de la matrice traduisent l'état courant de la pile par rapport à son état dans le futur.

En observant l'évolution des valeurs des distances calculées entre deux mois consécutifs, on peut détecter une dégradation permanente ou réversible de la pile.

Par exemple, sur la figure 7c, on a représenté l'évolution des distances calculées entre deux mois consécutifs. Grâce à ce graphique, on peut identifier une dégradation rapide les quatre premiers mois, puis une stabilisation, voire une amélioration lors du 8$^{ème}$ mois.

L'évolution de la distance calculée entre deux mois successifs permet de produire un indicateur visuel de l'état de santé de la pile ou de la vitesse de dégradation de la pile.

Selon un autre mode de réalisation de l'invention illustré à la figure 8, la distance calculée pour un intervalle temporel est comparée à au moins deux valeurs seuil afin de détecter une dégradation trop importante de la pile nécessitant une maintenance.

Il est possible de réaliser, sur banc de test, des courbes de polarisation de référence correspondant à des valeurs limites de fonctionnement de la pile à combustible qui sont, par exemple, définies par le constructeur de la pile. Par exemple, lorsqu'une courbe de polarisation passe en dessous d'une courbe de référence seuil, une alerte de maintenance peut être déclenchée. Ces courbes de polarisation de référence peuvent aussi être modélisées par simulation.

Pour pouvoir comparer une courbe de polarisation de référence à un nuage de points issus d'un groupe de mesures, on génère artificiellement autour de la courbe de référence, un nuage de points correspondant à une répartition des valeurs (courant, tension) équivalente au modèle choisi précédemment (par exemple un mélange de Gaussiennes). La taille du nuage de point dépend notamment de la dispersion qui est proportionnelle à l'écart des deux versions de la courbe de référence selon deux valeurs de températures (par exemple 60°c et 70°C).

Ce principe est illustré sur la figure 8 qui représente une première courbe de polarisation seuil CPS1 obtenue à une première température, par exemple égale à 70°C, une seconde courbe de polarisation seuil CPS2 obtenue à une seconde température, par exemple égale à 60°C. Les courbes CPS1, CPS2 correspondent à des valeurs limites en dessous desquelles la pile est susceptible d'être défaillante. Une troisième courbe de polarisation seuil CPS3, générée pour une température égale à 60°C et une quatrième courbe de polarisation seuil CPS4, générée pour une température égale à 70°C correspondent à des valeurs maximales obtenues lorsque la pile est neuve.

Les répartitions des valeurs (courant, tension) mesurées au cours du temps doivent se situer dans la zone de fonctionnement ZF pour que l'état de santé de la pile soit conforme aux exigences requises.

Pour comparer ces répartitions avec les valeurs seuils de référence, on produit artificiellement une première répartition $R_{min}$ et une seconde répartition $R_{max}$ à partir des courbes de références respectives créées pour les deux valeurs seuils de température.

Chaque répartition est modélisée à partir des longueurs $l_1$, $l_2$ selon les deux axes $v_1$, $v_2$ du nuage de points puis de la matrice de covariance du modèle obtenue de la manière suivante :

$$\begin{cases} C = [v_1\ v_2] * \begin{bmatrix} l_1 & 0 \\ 0 & l_2 \end{bmatrix}^{1/2} \\ \Sigma = CC^* \end{cases}$$

Ensuite, on calcule, pour chaque nouvelle répartition créée à partir d'un ensemble de mesures, une distance entre cette nouvelle répartition et les deux répartitions seuils $R_{min}$ et $R_{max}$. L'évolution de ces deux distances au cours du temps permet de détecter un éventuel franchissement du seuil bas qui correspond aux limites de fonctionnement de la pile et au déclenchement d'une alerte de maintenance.

La figure 9 représente les distances calculées pour différents mois successifs. La courbe 901 correspond à la distance entre la répartition des valeurs du mois courant et la répartition de référence correspondant au seuil maximum $R_{max}$. La courbe 902 correspond à la distance entre la répartition des valeurs du mois courant et la répartition de référence correspondant au seuil minimum $R_{min}$.

La courbe 901 de distance par rapport au nuage de point de référence maximum $R_{max}$ augmente au cours du temps, ce qui signifie que les nuages de point s'éloignent de plus en plus de la courbe de référence correspondant à l'état initial de la pile.

La courbe 902 décroit jusqu'au 6$^{ème}$ mois, ce qui signifie que la répartition de valeurs courantes se rapproche de la répartition de seuil minimum $R_{min}$. A partir du 6$^{ème}$ mois, la pente de la courbe 902 s'inverse, ce qui signifie que la répartition de valeurs courantes est passée en dessous de la répartition de seuil minimum $R_{min}$, ce qui est bien confirmé par le fait que la courbe 901, correspondant à la distance avec la répartition de seuil maximum $R_{max}$, augmente quant à elle. Une alerte de maintenance peut être déclenchée dans ce cas ou dans le cas où la courbe 902 passe en dessous d'une valeur seuil S correspondant à une proximité importante avec la répartition de seuil minimum $R_{min}$. De façon symétrique, un autre seuil peut être configuré pour détecter un éloignement trop important de la répartition de

seuil maximum $R_{max}$.

Dans un autre mode de réalisation de l'invention illustré par les figures 10a à 10d, on génère, à partir des répartitions de couples de valeurs (tension, courant) ou (tension, densité de courant), une courbe de polarisation pour la comparer directement avec des courbes seuils correspondant aux limites de fonctionnement de la pile.

La figure 10a représente une répartition de valeurs (courant, tension) correspondant à des mesures effectuées pour plusieurs mois consécutifs.

Pour déterminer une courbe de polarisation à partir d'une répartition de valeurs, plusieurs possibilités existent.

Une première possibilité consiste à effectuer une moyenne des courants à tension fixée tel qu'illustré sur les figures 10b et 10c. On obtient in fine plusieurs courbes de polarisation correspondant à plusieurs mois successifs tel qu'illustré sur la figure 10d.

Une deuxième possibilité consiste à effectuer une moyenne des tensions à courant fixé.

Une troisième possibilité est d'effectuer une régression linéaire polynômiale, par exemple de la forme :

$$U = a_0 + a_1 I + a_2 I^3 + a_3 \log(I).$$

Une fois les courbes de polarisation obtenues, il est possible de les comparer à des courbes de polarisation seuil $CPS_1$, $CPS_2$, $CPS_3$, $CPS_4$.

Autrement dit, selon cette troisième possibilité, on transforme les répartitions de valeurs (tension, courant) en courbes de polarisation pour les comparer à des courbes de polarisation de référence.

Dans un mode de réalisation particulier de l'invention, on détermine une ou plusieurs vitesses de dégradation e la pile à partir d'une ou plusieurs distances calculées à des instants donnés.

Un premier type de vitesse de dégradation est une vitesse instantanée qui est calculée à partir de distances déterminées entre deux instants de mesure.

La vitesse instantanée est définie par la relation $V_{inst}=D_{i-1,i}/\Delta t$.

$D_{i-1,i}$ est la distance entre deux groupes de mesures déterminés à des instants successifs i-1,i. La distance utilisée est, par exemple, la distance de Wasserstein.

$\Delta t$ est le temps entre les deux instants successifs i-1,i. Il peut s'agir du temps de séquençage choisi ou du temps de fonctionnement réel de la pile pour réaliser ce séquençage. Par exemple, il peut s'agir du temps calendaire, par exemple égal à un mois ou il peut s'agir du temps de fonctionnement réel de la pile pendant la durée calendaire, par exemple la pile n'a été utilisée que 20 heures pendant le mois.

En mettant en place un seuil de vitesse à ne pas dépasser on peut réaliser un suivi du comportement de la pile à combustible. Si un changement de comportement important apparait, la vitesse va augmenter et une alerte peut alors être déclenchée. Ainsi, dans un mode de réalisation de l'invention, la vitesse instantanée est comparée à un seuil de déclenchement d'une alerte.

Un deuxième type de vitesse est la vitesse de dégradation de la pile qui est une vitesse effective. Pour calculer la vitesse de dégradation de la pile, on considère tout l'historique du déplacement du nuage de points depuis la première mesure jusqu'à l'instant i.

La vitesse de dégradation de la pile est alors définie par la relation suivante :

$$V_{deg,i} = \frac{\sum_{k=1}^{i} D_{k-1,k}}{TOT_i}$$

avec $TOT_i$ le temps de fonctionnement total de la pile jusqu'à l'instant de mesure i. La distance D utilisée est, par exemple la distance de Wasserstein. La vitesse de dégradation permet d'estimer les accélérations ou les décélérations de la dégradation de la pile. Elle permet également d'estimer le temps restant avant le dépassement d'un seuil de fin de vie de la pile.

Une autre façon de calculer la vitesse de dégradation de la pile est donnée par la relation suivante :

$$V_{deg,i} = \frac{D_{0,i}}{TOT_i}$$

$D_{0,i}$ est la distance entre le premier groupe de mesures correspondant au seuil de début de vie et le groupe de mesures réalisé à l'instant i.

Cette seconde façon de calculer la vitesse de dégradation de la pile rend compte d'un positionnement effectif du nuage de points dans l'espace tension/courant. Elle permet de comparer les vitesses plus facilement dans l'espace de perte de performance.

Dans un autre mode de réalisation de l'invention, on détermine une estimation du temps restant avant que la pile à combustible atteigne une zone critique correspondant à une zone de fin de vie.

Pour cela, on détermine au préalable un seuil de fin de vie qui correspond, par exemple, à une courbe de polarisation estimée en fin de vie d'une pile à combustible ou à un seuil prédéterminé au-delà duquel la pile est considérée en fin de vie. Cette courbe correspond par exemple à la courbe notée $R_{max}$ introduite précédemment.

Ensuite, à partir de la distance $D_{i,N}$ entre un nuage de points mesuré à l'instant i et le seuil de fin de vie d'une part et la vitesse de dégradation à l'instant i d'autre part, on peut estimer le temps restant avant que la pile n'atteigne le seuil de fin de vie.

En prenant l'hypothèse que la vitesse de dégradation reste constante dans le futur, le temps restant avant fin de vie peut être donné par la relation :

$$T_{fv} = \frac{(D_{0,i}+D_{i,N})}{V_{deg,i}} - TOT_i \ .$$

Le temps restant avant fin de vie peut être exprimé en nombre de jours de fonctionnement restant. Le temps restant avant fin de vie peut encore être amélioré en utilisant un modèle de prévision de la vitesse de dégradation aux instants futurs.

L'invention peut être mise en œuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en œuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

Alternativement, l'invention peut aussi être mise en œuvre au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array »). La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Les différentes courbes de polarisation ou d'évolution de distance calculée au cours du temps, telles que représentées notamment aux figures 7a-7c, 9 ainsi que tout indicateur de dégradation ou de vieillissement déterminé à partir de ces courbes peut être restitué à un utilisateur via un écran d'affichage ou toute autre interface graphique.

Lorsqu'une alerte de maintenance est déclenchée par la méthode selon l'invention, l'alerte peut être visuelle ou sonore.

L'invention peut être implémentée dans un organe d'aide à la maintenance et correspond à un outil permettant d'automatiser la maintenance d'une pile à combustible à bord d'un véhicule.

Références

[1] Bouchara W. and al. PEMFC Durability Test under Specific Dynamic Current Solicitation, Linked to a Vehicle Road Cycle. International Journal of Hydrogen Energy 2007;32(17):4523 e11

[2] Onanena R. and al. Fuel cells static and dynamic characterizations as tools for the estimation of their ageing time. International Journal of Hydrogen Energy 2011 ;36(2):1730e9.

[3] Geoffrey M. and al. The EM algorithm and extensions, John Wiley & Sons, 2007 : 382.

[4] Didier D. and al. Probabilités et statistiques : problèmes à temps fixe, Masson, 1982 : (1).

[5] Wayne L. Winston and al. Introduction to mathematical programming, Volume 1. Thomson/Brooks/Cole Duxbury; Paci_c Grove,CA, 2003.

**Revendications**

**1.** Méthode, mise en œuvre par ordinateur, pour estimer l'état de santé d'une pile à combustible embarquée dans un véhicule en fonctionnement et comprenant une pluralité de cellules, la dite méthode comprenant les étapes de :

- Recevoir (401) une pluralité d'ensembles de groupes de mesures réalisées au cours d'une pluralité d'intervalles temporels successifs respectifs à bord d'un véhicule en fonctionnement, chaque groupe de mesures comprenant au moins une mesure de la tension aux bornes d'au moins une cellule de la pile à combustible, une mesure du courant ou de la densité de courant traversant au moins une cellule de la pile à combustible et une mesure d'au moins une grandeur physique parmi la température, le débit d'air, la pression d'air dans au moins une cellule de la pile à combustible,
- pour chaque ensemble de groupes de mesures reçues associé à un intervalle temporel courant,
  - déterminer (404) une répartition des valeurs des couples de mesures (tension, courant) ou (tension, densité de courant),
  - calculer (405) au moins une distance entre ladite répartition et au moins une répartition de valeurs de référence ou entre ladite répartition et au moins une répartition déterminée pour un autre intervalle temporel que l'intervalle temporel courant,
- déterminer (406) un indicateur de l'état de santé de la pile à combustible à partir d'au moins une distance calculée.

**2.** Méthode pour estimer l'état de santé d'une pile à combustible selon la revendication 1 comprenant en outre une étape de filtrage (402) de l'ensemble des mesures reçues de manière à supprimer les groupes de mesures réalisées pendant au moins une phase d'arrêt du véhicule et/ou pendant au moins une phase de démarrage du véhicule.

**3.** Méthode pour estimer l'état de santé d'une pile à combustible selon l'une des revendications précédentes comprenant en outre une étape de filtrage (403) de l'ensemble des mesures reçues de manière à conserver uniquement les groupes de mesures pour lesquels au moins une mesure d'au moins une grandeur physique est comprise dans au moins un intervalle prédéterminé.

**4.** Méthode pour estimer l'état de santé d'une pile à combustible selon l'une des revendications précédentes comprenant en outre une étape de détermination, pour chaque ensemble de groupes de mesures reçues, d'un modèle numérique de la répartition des valeurs des couples de mesures (tension, courant) ou (tension, densité de courant).

5. Méthode pour estimer l'état de santé d'une pile à combustible selon la revendication 4 dans laquelle ledit modèle numérique est obtenu par estimation de la fonction de répartition des valeurs desdits couples de mesures selon une loi de probabilité prédéterminée.

6. Méthode pour estimer l'état de santé d'une pile à combustible selon l'une des revendications 4 ou 5 dans lequel la distance calculée est égale au maximum des valeurs absolues des différences entre les valeurs respectives des modèles numériques correspondants à deux répartitions déterminées pour deux ensembles différents de groupes de mesures associés à deux intervalles temporels distincts.

7. Méthode pour estimer l'état de santé d'une pile à combustible selon l'une des revendications 4 ou 5 dans lequel la distance calculée est une distance de Wasserstein.

8. Méthode pour estimer l'état de santé d'une pile à combustible selon l'une des revendications précédentes comprenant en outre une étape de construction, pour chaque ensemble de groupes de mesures reçues, d'une courbe de polarisation (courant, tension) ou (densité de courant, tension) à partir de la répartition des valeurs des couples de mesures, ladite au moins une distance étant calculée entre ladite courbe de polarisation et au moins une courbe de polarisation de référence ou au moins une courbe de polarisation déterminée pour un autre intervalle temporel.

9. Méthode pour estimer l'état de santé d'une pile à combustible selon la revendication 8 dans lequel ladite courbe de polarisation est construite en calculant la moyenne des courants ou des densités de courant pour chaque valeur de tension, ou en calculant la moyenne des tensions pour chaque valeur de courant ou densité de courant ou en appliquant une régression linéaire polynômiale aux valeurs des couples de mesures.

10. Méthode pour estimer l'état de santé d'une pile à combustible selon l'une des revendications précédentes comprenant le calcul de toutes les distances entre deux répartitions de valeurs correspondants à deux intervalles temporels distincts et la génération d'une représentation graphique d'au moins une partie des distances calculées.

11. Méthode pour estimer l'état de santé d'une pile à combustible selon la revendication 9 comprenant la génération d'une représentation graphique des distances entre deux répartitions de valeurs correspondant à deux intervalles temporels consécutifs.

12. Méthode pour estimer l'état de santé d'une pile à combustible selon l'une des revendications précédentes comprenant, pour chaque ensemble de groupes de mesures reçues, le calcul d'une première distance entre ladite répartition de valeurs et une répartition de valeurs de référence correspondant à des valeurs limites de fonctionnement de la pile à combustible et le calcul d'une seconde distance entre ladite répartition de valeurs et une répartition de valeurs correspondant à un intervalle temporel initial.

13. Méthode pour estimer l'état de santé d'une pile à combustible selon la revendication 12 comprenant la génération d'une représentation graphique de la première distance et de la seconde distance, en fonction du temps.

14. Méthode pour estimer l'état de santé d'une pile à combustible selon l'une des revendications 10,11 ou 13 comprenant en outre une étape d'affichage d'au moins une représentation graphique générée sur une interface visuelle.

15. Méthode pour estimer l'état de santé d'une pile à combustible selon l'une des revendications précédentes comprenant en outre une étape de détermination d'une vitesse de dégradation de la pile à combustible à partir d'au moins une distance calculée entre deux répartitions de valeurs mesurées à deux instants différents.

16. Méthode pour estimer l'état de santé d'une pile à combustible selon la revendication 15 comprenant en outre une étape de détermination du temps restant avant fin de vie de la pile à combustible à partir de la vitesse de dégradation et d'une distance calculée entre une répartition de valeurs mesurée à un instant courant et un seuil de fin de vie prédéterminé.

17. Méthode pour estimer l'état de santé d'une pile à combustible selon l'une des revendications précédentes comprenant en outre la comparaison d'au moins une distance calculée ou d'une vitesse de dégradation calculée à un seuil d'alerte et le déclenchement d'une alerte en fonction du résultat de la comparaison.

18. Programme d'ordinateur comportant des instructions pour l'exécution de la méthode pour estimer l'état de santé d'une pile à combustible selon l'une des revendications précédentes, lorsque le programme est exécuté par un processeur.

19. Support d'enregistrement lisible par un processeur sur lequel est enregistré un programme comportant des instructions pour l'exécution de la méthode pour estimer l'état de santé d'une pile à combustible selon l'une des revendications 1 à 18, lorsque le programme est exécuté par un processeur.

20. Système pour estimer l'état de santé d'une pile à combustible, comprenant une pile à combustible (PAC) destinée à être embarquée dans un véhicule en fonctionnement, un dispositif de mesure de la tension (211) aux bornes d'au moins une cellule de la pile à combustible (PAC), un dispositif de mesure du courant (210) ou de la densité de courant traversant au moins une cellule de la pile à combustible (PAC) et un dispositif de mesure d'au moins une grandeur physique parmi la température (220), le débit d'air (240), la pression d'air (230) dans au moins une cellule de la pile à combustible, un transmetteur (TR) pour transmettre, depuis ledit véhicule, les mesures réalisées à des instants successifs par au moins l'un des dispositifs de mesure, un calculateur et une mémoire pour recevoir les mesures réalisées et exécuter la méthode pour estimer l'état de santé d'une pile à combustible selon l'une des revendications 1 à 18.

21. Système pour estimer l'état de santé d'une pile à combustible selon la revendication 20 comprenant en outre une interface visuelle pour afficher au moins une représentation graphique générée par le calculateur.

## Patentansprüche

1. Verfahren, durchgeführt von einem Computer, zum Schätzen des Gesundheitszustands einer Brennstoffzellenbatterie mit mehreren Zellen an Bord eines in Betrieb befindlichen Fahrzeugs, wobei das Verfahren die folgenden Schritte beinhaltet:

   - Empfangen (401) mehrerer Sätze von Messwertgruppen, ausgeführt über mehrere jeweilige aufeinander folgende Zeitintervalle an Bord eines in Betrieb befindlichen Fahrzeugs, wobei jede Messwertgruppe wenigstens einen Messwert für die Spannung an den Anschlüssen von wenigstens einer Zelle der Brennstoffzellenbatterie, einen Messwert für den oder die durch wenigstens eine Zelle der Brennstoffzelle fließende(n) Strom/Stromdichte und einen Messwert für wenigstens eine physikalische Größe aus Temperatur, Luftstrom, Luftdruck in wenigstens einer Zelle der Brennstoffzellenbatterie umfasst;
   - für jeden Satz von empfangenen Messwertgruppen in Assoziation mit einem aktuellen Zeitintervall:

     * Bestimmen (404) einer Verteilung der Werte der Messwertpaare (Spannung, Strom) oder (Spannung, Stromdichte);
     * Berechnen (405) wenigstens einer Distanz zwischen der Verteilung und wenigstens einer Verteilung von Referenzwerten oder zwischen der Verteilung und wenigstens einer bestimmten Verteilung für ein anderes Zeitintervall als das aktuelle Zeitintervall;

   - Bestimmen (406) eines Indikators des Gesundheitszustands der Brennstoffzellenbatterie auf der Basis von wenigstens einer berechneten Distanz.

2. Verfahren zum Schätzen des Gesundheitszustands einer Brennstoffzellenbatterie nach Anspruch 1, das ferner einen Schritt des Filterns (402) aller empfangenen Messwerte beinhaltet, um die während wenigstens einer Anhaltephase des Fahrzeugs und/oder während wenigstens einer Anfahrphase des Fahrzeugs ausgeführten Messwertgruppen zu unterdrücken.

3. Verfahren zum Schätzen des Gesundheitszustands einer Brennstoffzellenbatterie nach einem der vorherigen Ansprüche, das ferner einen Schritt des Filterns (403) aller empfangenen Messwerte beinhaltet, um nur die Messwertgruppen zu behalten, für die wenigstens ein Messwert für wenigstens eine physikalische Größe in wenigstens einem vorbestimmten Intervall enthalten ist.

4. Verfahren zum Schätzen des Gesundheitszustands einer Brennstoffzellenbatterie nach einem der vorherigen Ansprüche, das ferner einen Schritt des Bestimmens, für jeden Satz von empfangenen Messwertgruppen, eines digitalen Modells der Verteilung der Werte der Messwertpaare (Spannung, Strom) oder (Spannung, Stromdichte) beinhaltet.

5. Verfahren zum Schätzen des Gesundheitszustands einer Brennstoffzelle nach Anspruch 4, wobei das digitale Modell durch Schätzen der Verteilungsfunktion der Werte der Messwertpaare gemäß einem vorbestimmten Wahrscheinlichkeitsgesetz erhalten wird.

6. Verfahren zum Schätzen des Gesundheitszustands einer Brennstoffzellenbatterie nach Anspruch 4 oder 5, wobei die berechnete Distanz gleich dem Maximum der Absolutwerte der Differenzen zwischen den jeweiligen Werten der digitalen Modelle entsprechend zwei bestimmten Verteilungen für zwei unterschiedliche Sätze von Messwertgruppen in Assoziation mit zwei separaten Zeitintervallen ist.

7. Verfahren zum Schätzen des Gesundheitszustands einer Brennstoffzellenbatterie nach Anspruch 4 oder 5, wobei die berechnete Distanz eine Wasserstein-Distanz ist.

8. Verfahren zum Schätzen des Gesundheitszustands einer Brennstoffzellenbatterie nach einem der vorherigen Ansprüche, das ferner einen Schritt des Erstellens, für jeden Satz von empfangenen Messwertgruppen, einer Polarisationskurve (Strom, Spannung) oder (Stromdichte, Spannung) auf der Basis der Verteilung der Messwertpaare beinhaltet, wobei die wenigstens eine Distanz zwischen der Polarisationskurve und wenigstens einer Referenzpolarisationskurve oder wenigstens einer für ein anderes Zeitintervall bestimmten Polarisationskurve berechnet wird.

9. Verfahren zum Schätzen des Gesundheitszustands einer Brennstoffzellenbatterie nach Anspruch 8, wobei die Polarisationskurve durch Berechnen des Mittels der Ströme oder Stromdichten für jeden Spannungswert oder durch Berechnen des Mittels der Spannungen für jeden Stromwert oder Stromdichtewert oder durch Anwenden einer polynomen linearen Regression auf die Messwertpaare erstellt wird.

10. Verfahren zum Schätzen des Gesundheitszustands einer Brennstoffzellenbatterie nach einem der vorherigen Ansprüche, das das Berechnen aller Distanzen zwischen zwei Verteilungen von Werten entsprechend zwei separaten Zeitintervallen und das Erzeugen einer grafischen Darstellung wenigstens eines Teils der berechneten Distanzen beinhaltet.

11. Verfahren zum Schätzen des Gesundheitszustands einer Brennstoffzellenbatterie nach Anspruch 9, das das Erzeugen einer grafischen Darstellung der Distanzen zwischen zwei Verteilungen von Werten entsprechend zwei konsekutiven Zeitintervallen beinhaltet.

12. Verfahren zum Schätzen des Gesundheitszustands einer Brennstoffzellenbatterie nach einem der vorherigen Ansprüche, das für jeden Satz von empfangenen Messwertgruppen das Berechnen einer ersten Distanz zwischen der Verteilung von Werten und einer Verteilung von Referenzwerten entsprechend Betriebsgrenzwerten der Brennstoffzellenbatterie und das Berechnen einer zweiten Distanz zwischen der Verteilung von Werten und einer Verteilung von Werten entsprechend einem Anfangszeitintervall beinhaltet.

13. Verfahren zum Schätzen des Gesundheitszustands einer Brennstoffzellenbatterie nach Anspruch 12, das das Erzeugen einer grafischen Darstellung der ersten Distanz und der zweiten Distanz in Abhängigkeit von der Zeit beinhaltet.

14. Verfahren zum Schätzen des Gesundheitszustands einer Brennstoffzellenbatterie nach Anspruch 10, 11 oder 13, das ferner einen Schritt des Anzeigens wenigstens einer auf einer visuellen Schnittstelle erzeugten grafischen Darstellung beinhaltet.

15. Verfahren zum Schätzen des Gesundheitszustands einer Brennstoffzellenbatterie nach einem der vorherigen Ansprüche, das ferner einen Schritt des Bestimmens einer Degradationsrate der Brennstoffzellenbatterie auf der Basis von wenigstens einer berechneten Distanz zwischen zwei Verteilungen von zu zwei unterschiedlichen Zeitpunkten gemessenen Werten beinhaltet.

16. Verfahren zum Schätzen des Gesundheitszustands einer Brennstoffzellenbatterie nach Anspruch 15, das ferner einen Schritt des Bestimmens der bis zum Lebenszeitende der Brennstoffzellenbatterie verbleibenden Zeit auf der Basis der Degradationsrate und einer berechneten Distanz zwischen einer Verteilung von zu einem aktuellen Zeitpunkt gemessenen Werten und einer vorbestimmten Lebenszeitendeschwelle beinhaltet.

17. Verfahren zum Schätzen des Gesundheitszustands einer Brennstoffzellenbatterie nach einem der vorherigen Ansprüche, das ferner das Vergleichen wenigstens einer berechneten Distanz oder einer berechneten Degradationsrate mit einer Warnschwelle und das Auslösen einer Warnung in Abhängigkeit vom Ergebnis des Vergleichs beinhaltet.

**18.** Computerprogramm, das Befehle zum Ausführen des Verfahrens zum Schätzen des Gesundheitszustands einer Brennstoffzellenbatterie nach einem der vorherigen Ansprüche beinhaltet, wenn das Programm von einem Prozessor ausgeführt wird.

**19.** Prozessorlesbares Speichermedium, auf dem ein Programm gespeichert wird, das Befehle zum Ausführen des Verfahrens zum Schätzen des Gesundheitszustands einer Brennstoffzellenbatterie nach einem der Ansprüche 1 bis 18 umfasst, wenn das Programm von einem Prozessor ausgeführt wird.

**20.** System zum Schätzen des Gesundheitszustands einer Brennstoffzellenbatterie, umfassend eine Brennstoffzellenbatterie (PAC) zum Platzieren an Bord eines in Betrieb befindlichen Fahrzeugs, ein Gerät zum Messen der Spannung (211) an den Anschlüssen von wenigstens einer Zelle der Brennstoffzellenbatterie (PAC), ein Gerät zum Messen des oder der durch wenigstens eine Zelle der Brennstoffzelle (PAC) fließenden Stroms (210)/ Stromdichte und ein Gerät zum Messen wenigstens einer physikalischen Größe aus Temperatur (220), Luftstrom (240), Luftdruck (230) in wenigstens einer Zelle der Brennstoffzellenbatterie, einen Sender (TR) zum Senden, von dem Fahrzeug, der zu aufeinander folgenden Zeitpunkten von wenigstens einem der Messgeräte ausgeführten Messwerte, einen Rechner und einen Speicher zum Empfangen der ausgeführten Messwerte und zum Durchführen des Verfahrens zum Schätzen des Gesundheitszustands einer Brennstoffzellenbatterie nach einem der Ansprüche 1 bis 18.

**21.** System zum Schätzen des Gesundheitszustands einer Brennstoffzellenbatterie nach Anspruch 20, das ferner eine visuelle Schnittstelle zum Anzeigen wenigstens einer graphischen Darstellung umfasst, die von dem Computer erzeugt wurde.

## Claims

**1.** A method, implemented by a computer, for estimating the health of a fuel cell battery on board an operating vehicle and comprising a plurality of cells, said method comprising the following steps:

- receiving (401) a plurality of sets of groups of measurements conducted during a plurality of respective successive time intervals on board an operating vehicle, each group of measurements comprising at least one measurement of the voltage at the terminals of at least one cell of the fuel cell battery, a measurement of the current or of the current density passing through at least one cell of the fuel cell battery and a measurement of at least one physical magnitude from among the temperature, the air flow, the air pressure in at least one cell of the fuel cell battery;
- for each set of groups of received measurements associated with a current time interval:

  • determining (404) a distribution of the values of the pairs of measurements (voltage, current) or (voltage, current density);
  • computing (405) at least one distance between said distribution and at least one distribution of reference values or between said distribution and at least one determined distribution for a time interval other than the current time interval;

- determining (406) an indicator of the health of the fuel cell battery on the basis of at least one computed distance.

**2.** The method for estimating the health of a fuel cell battery as claimed in claim 1, further comprising a step (402) of filtering all the received measurements so as to suppress the groups of measurements conducted during at least one stop phase of the vehicle and/or during at least one start-up phase of the vehicle.

**3.** The method for estimating the health of a fuel cell battery as claimed in any one of the preceding claims, further comprising a step (403) of filtering the set of the received measurements so as to only retain the groups of measurements for which at least one measurement of at least one physical magnitude is included in at least one predetermined interval.

**4.** The method for estimating the health of a fuel cell battery as claimed in any one of the preceding claims, further comprising a step of determining, for each set of groups of received measurements, a digital model of the distribution of the values of the pairs of measurements (voltage, current) or (voltage, current density).

5. The method for estimating the health of a fuel cell battery as claimed in claim 4, wherein said digital model is obtained by estimating the distribution function of the values of said pairs of measurements according to a predetermined probability law.

6. The method for estimating the health of a fuel cell battery as claimed in any one of claims 4 or 5, wherein the computed distance is equal to the maximum of the absolute values of the differences between the respective values of the digital models corresponding to two determined distributions for two different sets of groups of measurements associated with two distinct time intervals.

7. The method for estimating the health of a fuel cell battery as claimed in any one of claims 4 or 5, wherein the computed distance is a Wasserstein distance.

8. The method for estimating the health of a fuel cell battery as claimed in any one of the preceding claims, further comprising a step of constructing, for each set of groups of received measurements, a biasing curve (current, voltage) or (current density, voltage) on the basis of the distribution of the values of the pairs of measurements, said at least one distance being computed between said biasing curve and at least one reference biasing curve or at least one biasing curve determined for another time interval.

9. The method for estimating the health of a fuel cell battery as claimed in claim 8, wherein said biasing curve is constructed by computing the mean of the currents or of the current densities for each voltage value, or by computing the mean of the voltages for each current value or current density or by applying a polynomial linear regression to the values of the pairs of measurements.

10. The method for estimating the health of a fuel cell battery as claimed in any one of the preceding claims, comprising computing all the distances between two distributions of values corresponding to two distinct time intervals and generating a graphical representation of at least part of the computed distances.

11. The method for estimating the health of a fuel cell battery as claimed in claim 9, comprising generating a graphical representation of the distances between two distributions of values corresponding to two consecutive time intervals.

12. The method for estimating the health of a fuel cell battery as claimed in any one of the preceding claims, comprising, for each set of groups of received measurements, computing a first distance between said distribution of values and a distribution of reference values corresponding to operational limit values of the fuel cell battery and computing a second distance between said distribution of values and a distribution of values corresponding to an initial time interval.

13. The method for estimating the health of a fuel cell battery as claimed in claim 12, comprising generating a graphical representation of the first distance and of the second distance, as a function of time.

14. The method for estimating the health of a fuel cell battery as claimed in claims 10, 11 or 13, further comprising a step of displaying at least one generated graphical representation on a visual interface.

15. The method for estimating the health of a fuel cell battery as claimed in any one of the preceding claims, further comprising a step of determining a rate of degradation of the fuel cell battery on the basis of at least one computed distance between two distributions of values measured at two different instants.

16. The method for estimating the health of a fuel cell battery as claimed in claim 15, further comprising a step of determining the time remaining before the end-of-life of the fuel cell battery on the basis of the rate of degradation and of a computed distance between a distribution of values measured at a current instant and a predetermined end-of-life threshold.

17. The method for estimating the health of a fuel cell battery as claimed in any one of the preceding claims, further comprising comparing at least one computed distance or one computed rate of degradation with a warning threshold and triggering a warning as a function of the result of the comparison.

18. A computer program comprising instructions for executing the method for estimating the health of a fuel cell battery as claimed in any one of the preceding claims, when the program is executed by a processor.

**19.** A processor-readable storage medium, on which a program is stored comprising instructions for executing the method for estimating the health of a fuel cell battery according to any one of claims 1 to 18, when the program is executed by a processor.

**20.** A system for estimating the health of a fuel cell battery, comprising a fuel cell battery (PAC) intended to be placed on board an operating vehicle, a device for measuring the voltage (211) at the terminals of at least one fuel cell battery (PAC), a device for measuring the current (210) or the current density passing through at least one cell of the fuel cell battery (PAC) and a device for measuring at least one physical magnitude from among the temperature (220), the air flow (240), the air pressure (230) in at least one cell of the fuel cell battery, a transmitter (TR) for transmitting, from said vehicle, the measurements conducted at successive instants by at least one of the measuring devices, a computer and a memory for receiving the completed measurements and executing the method for estimating the health of a fuel cell battery as claimed in any one of claims 1 to 18.

**21.** The system for estimating the health of a fuel cell battery as claimed in claim 20, further comprising a visual interface for displaying at least one graphical representation generated by the computer.

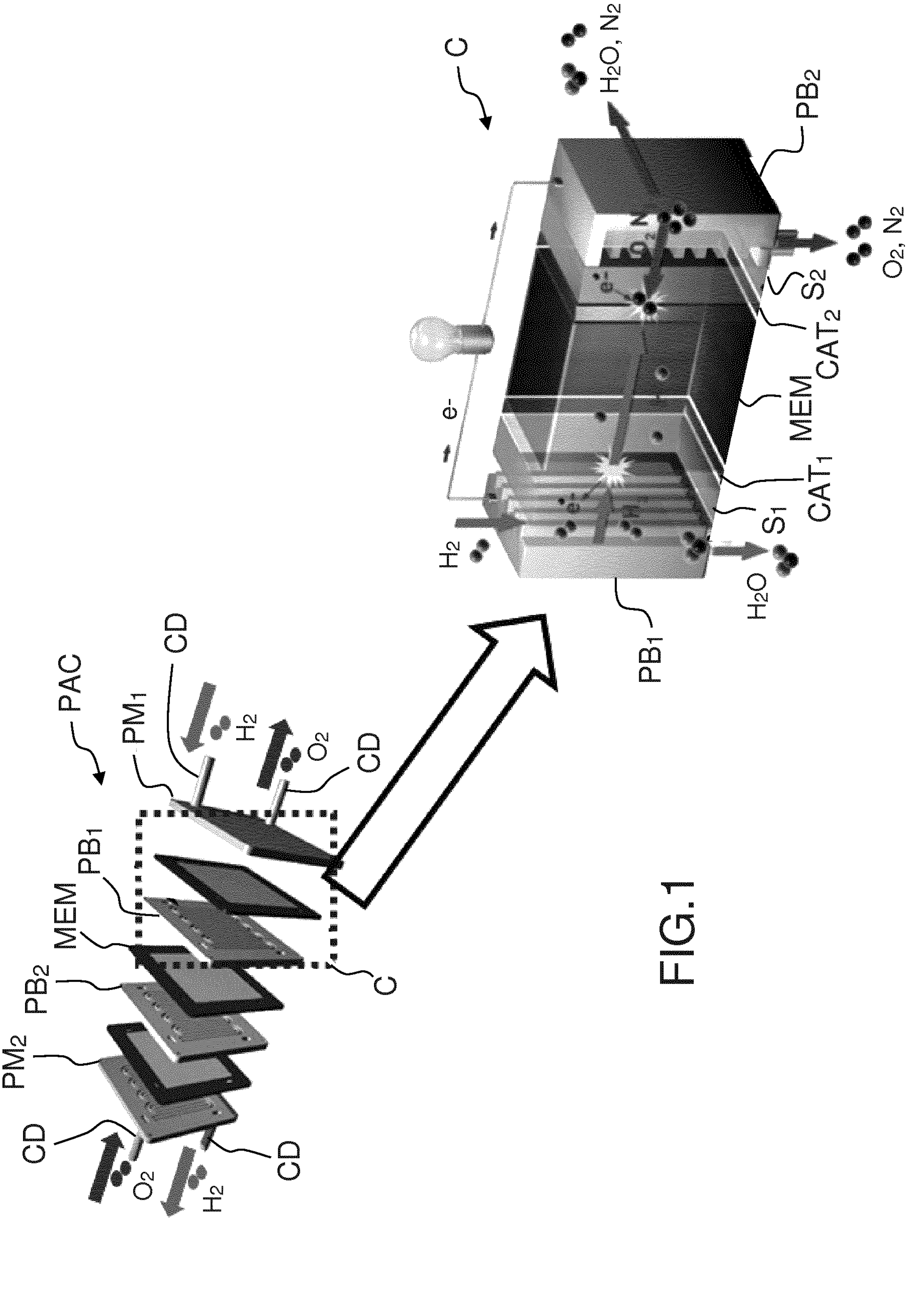
PAC
PM1
CD
H2
O2
CD
PB1
MEM
PB2
PM2
CD
O2
H2
CD
C
C
e-
H2O, N2
PB2
O2, N2
S2
CAT2
MEM
CAT1
S1
H2
H2O
PB1

FIG.1

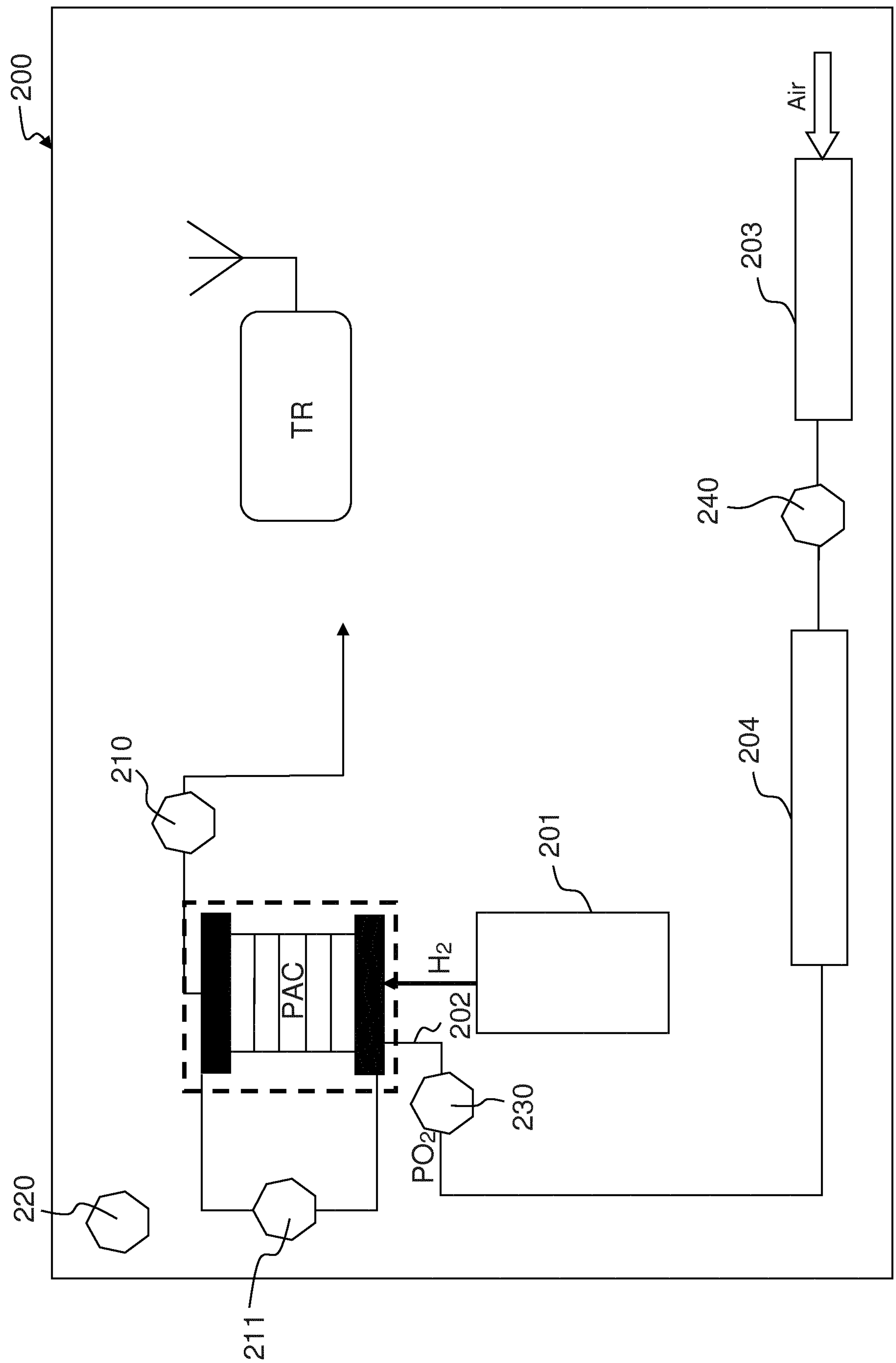


FIG.2

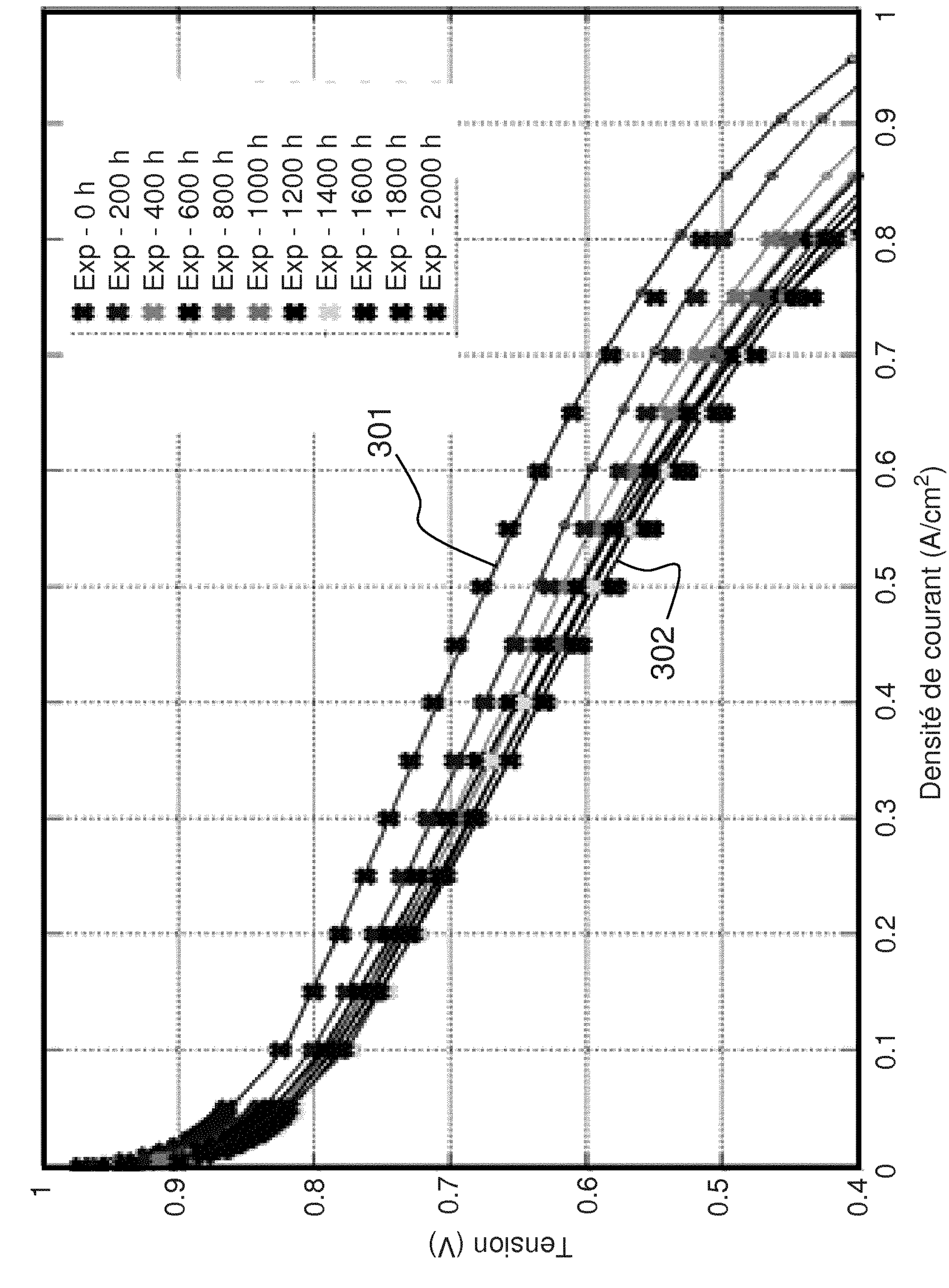

Tension (V)
Densité de courant (A/cm$^2$)
Exp - 0 h
Exp - 200 h
Exp - 400 h
Exp - 600 h
Exp - 800 h
Exp - 1000 h
Exp - 1200 h
Exp - 1400 h
Exp - 1600 h
Exp - 1800 h
Exp - 2000 h
301
302
0
0.1
0.2
0.3
0.4
0.5
0.6
0.7
0.8
0.9
1


FIG.3

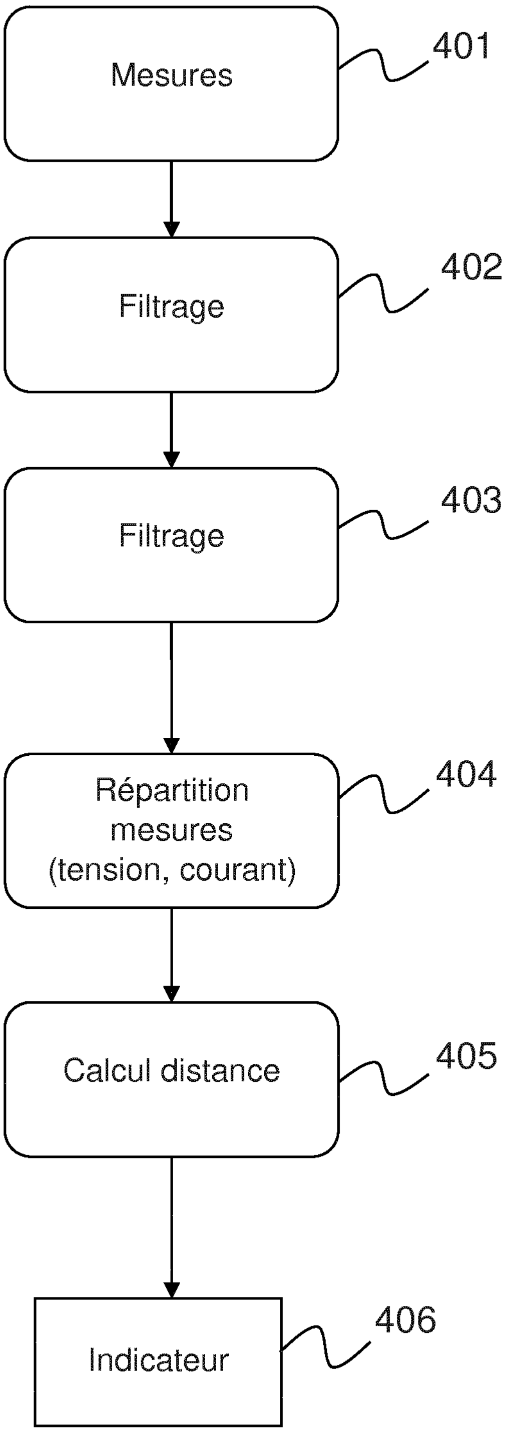
Mesures
401
Filtrage
402
Filtrage
403
Répartition
mesures
(tension, courant)
404
Calcul distance
405
Indicateur
406

FIG.4

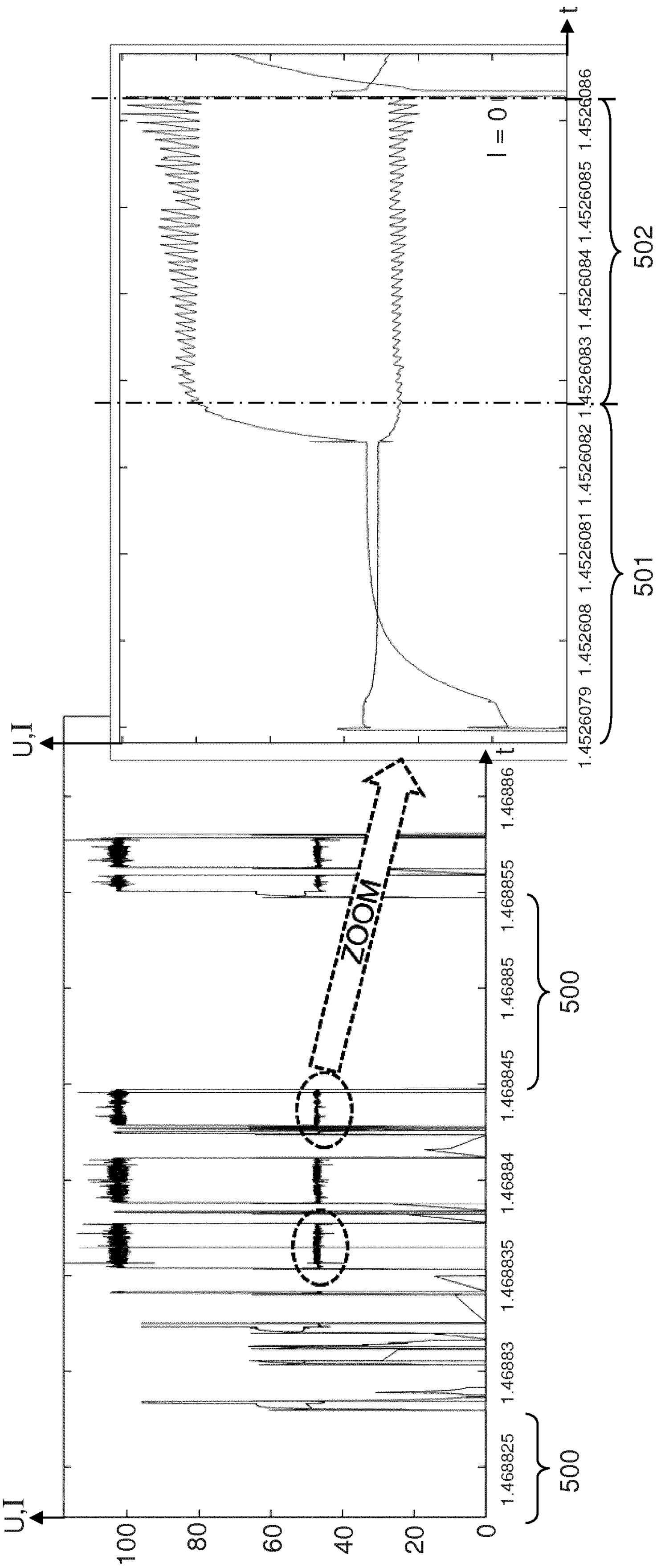
U,I
100
80
60
40
20
0
1.468825
1.46883
1.468835
1.46884
1.468845
1.46885
1.468855
1.46886
t
500
500
ZOOM
U,I
1.4526079
1.452608
1.4526081
1.4526082
1.4526083
1.4526084
1.4526085
1.4526086
t
t
I = 0
501
502

FIG.5

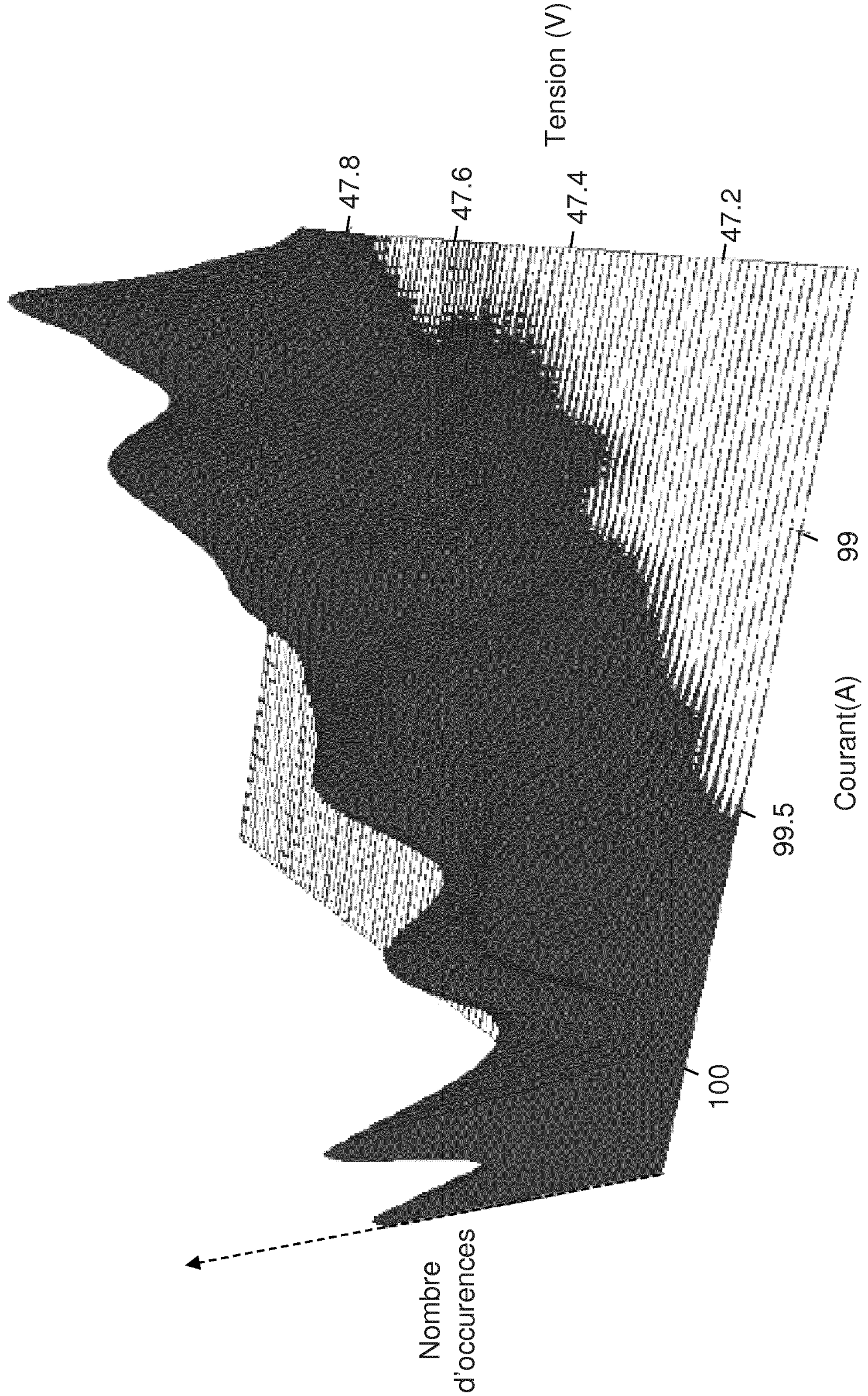
Tension (V)
47.8
47.6
47.4
47.2
Courant(A)
99
99.5
100
Nombre d'occurences

FIG.6

| | 2 | 3 | 4 | 5 | 6 | 7 | 8 | 9 | 10 |
|---|---|---|---|---|---|---|---|---|---|
| 2 | 0 | 0.72 | 0.86 | 0.90 | 0.72 | 0.77 | 0.81 | 0.79 | 0.83 |
| 3 | 0.72 | 0 | 0.56 | 0.69 | 0.45 | 0.56 | 0.59 | 0.57 | 0.63 |
| 4 | 0.86 | 0.56 | 0 | 0.27 | 0.32 | 0.47 | 0.74 | 0.58 | 0.66 |
| 5 | 0.90 | 0.69 | 0.27 | 0 | 0.29 | 0.21 | 0.48 | 0.32 | 0.40 |
| 6 | 0.72 | 0.45 | 0.32 | 0.29 | 0 | 0.22 | 0.50 | 0.33 | 0.46 |
| 7 | 0.77 | 0.56 | 0.47 | 0.21 | 0.22 | 0 | 0.32 | 0.14 | 0.26 |
| 8 | 0.81 | 0.59 | 0.74 | 0.48 | 0.50 | 0.32 | 0 | 0.18 | 0.12 |
| 9 | 0.79 | 0.57 | 0.58 | 0.32 | 0.33 | 0.14 | 0.18 | 0 | 0.15 |
| 10 | 0.83 | 0.63 | 0.66 | 0.40 | 0.46 | 0.26 | 0.12 | 0.15 | 0 |

FIG.7a

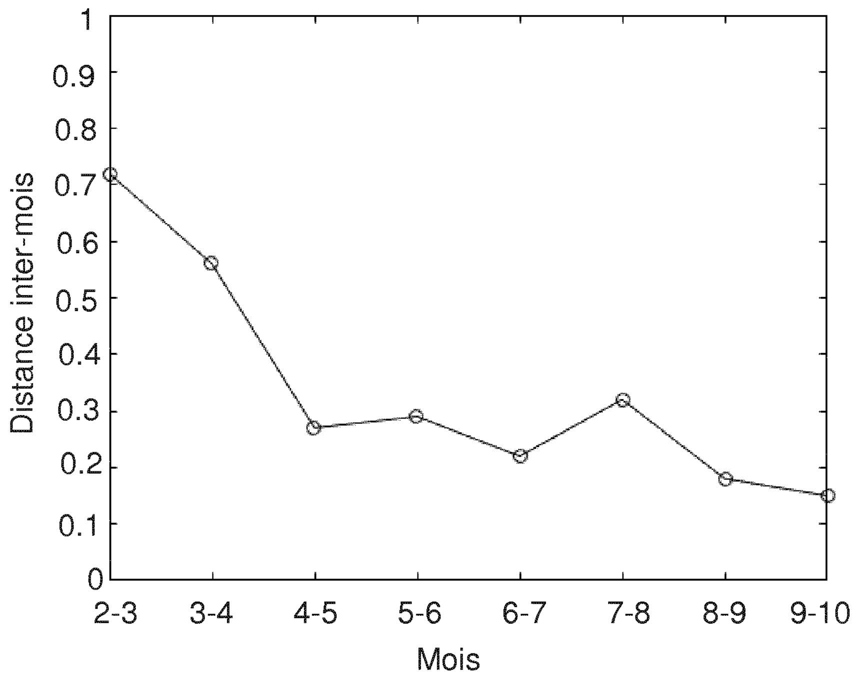


FIG.7c

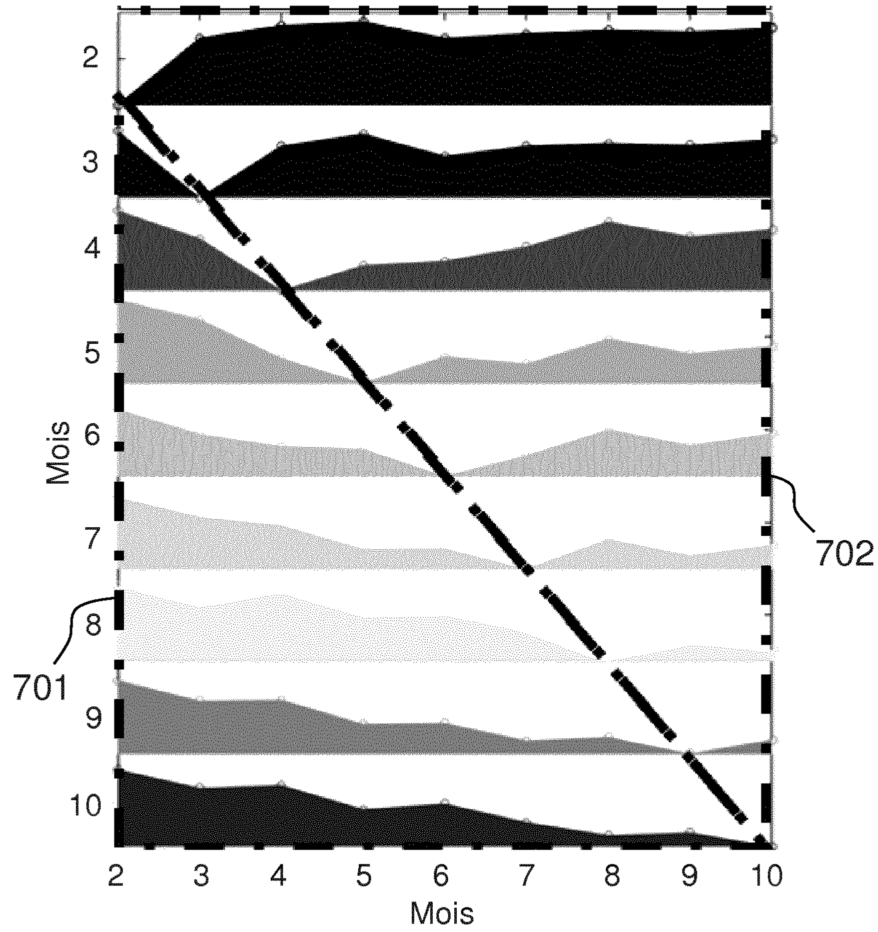


FIG.7b

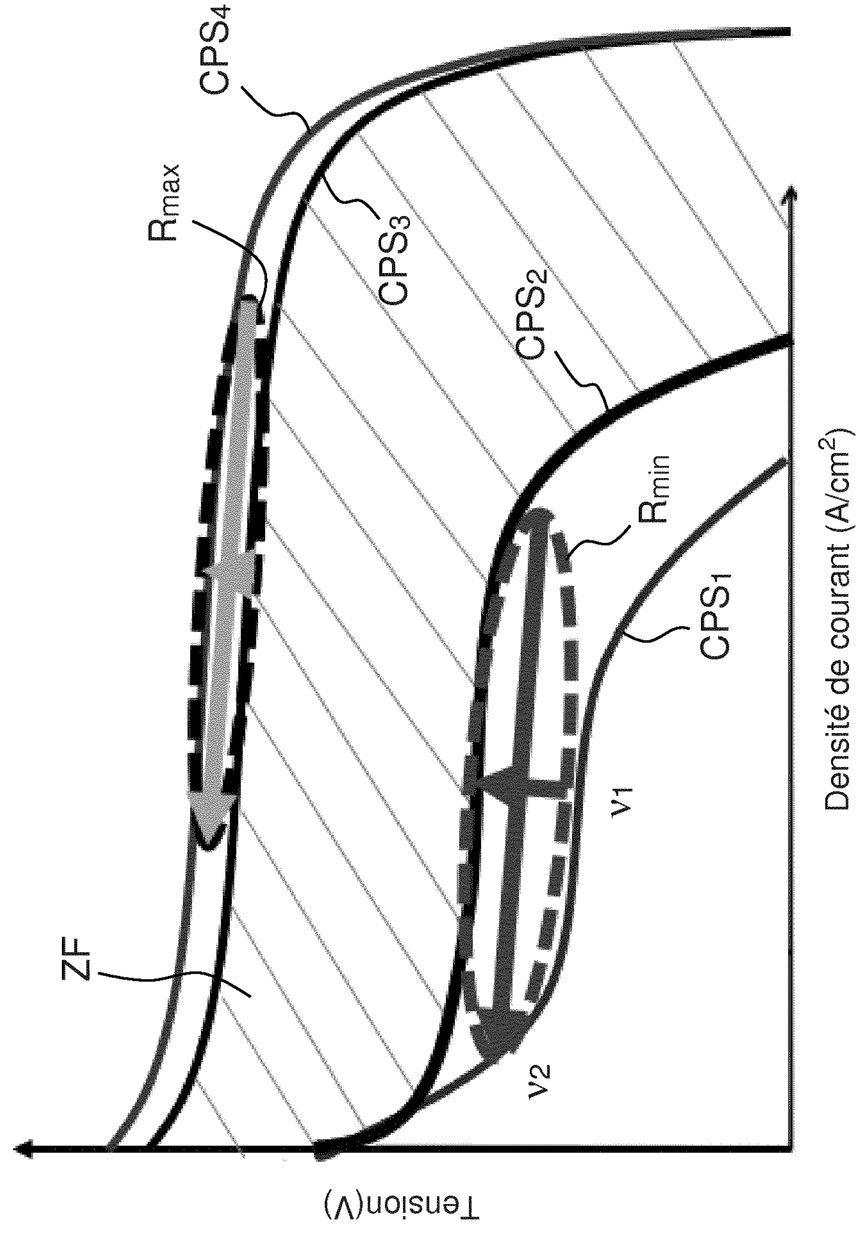
CPS4
CPS3
CPS2
CPS1
Rmax
Rmin
ZF
v1
v2
Densité de courant (A/cm2)
Tension(V)

FIG.8

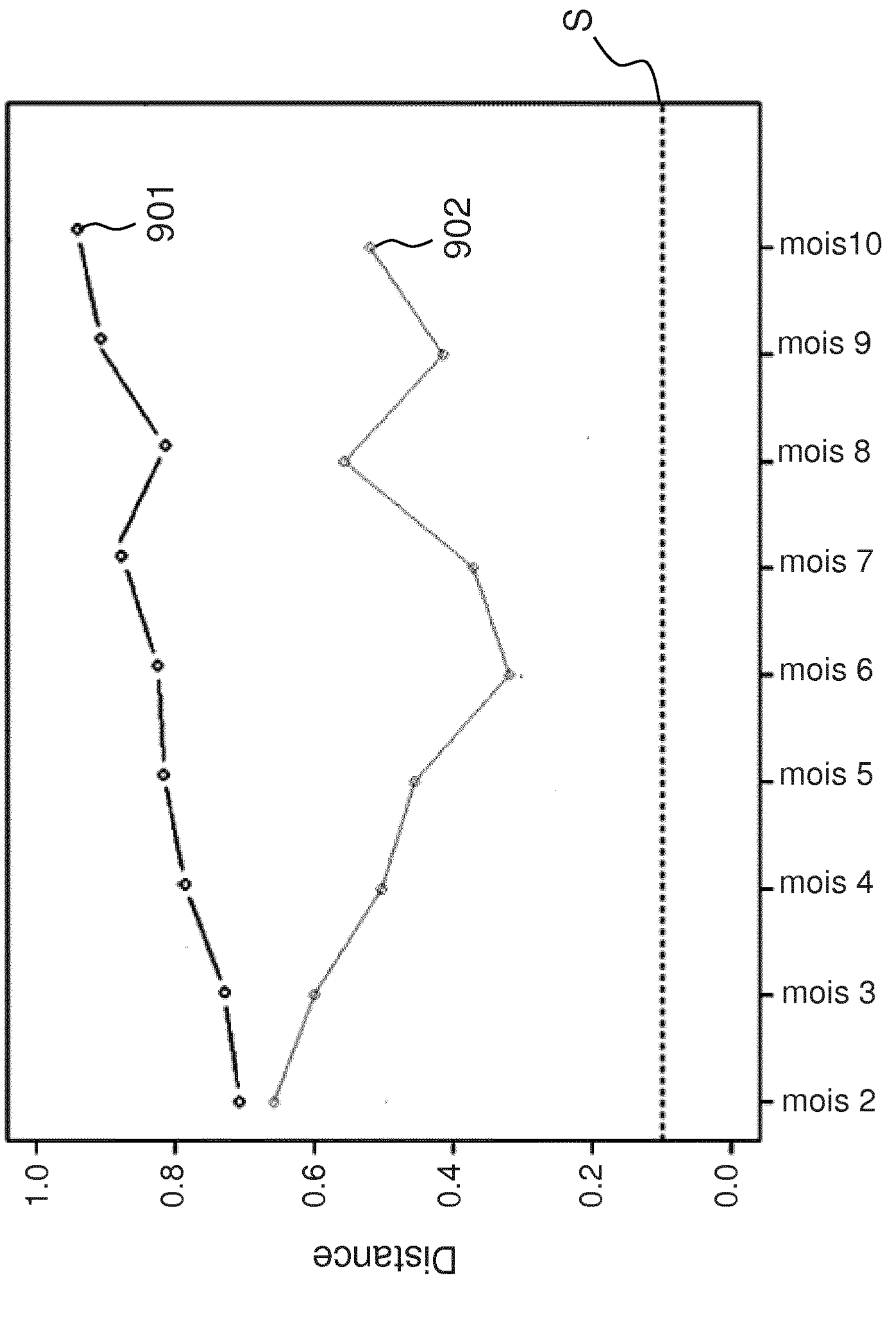
S
901
902
1.0
0.8
0.6
0.4
0.2
0.0
Distance
mois 2
mois 3
mois 4
mois 5
mois 6
mois 7
mois 8
mois 9
mois10

FIG.9

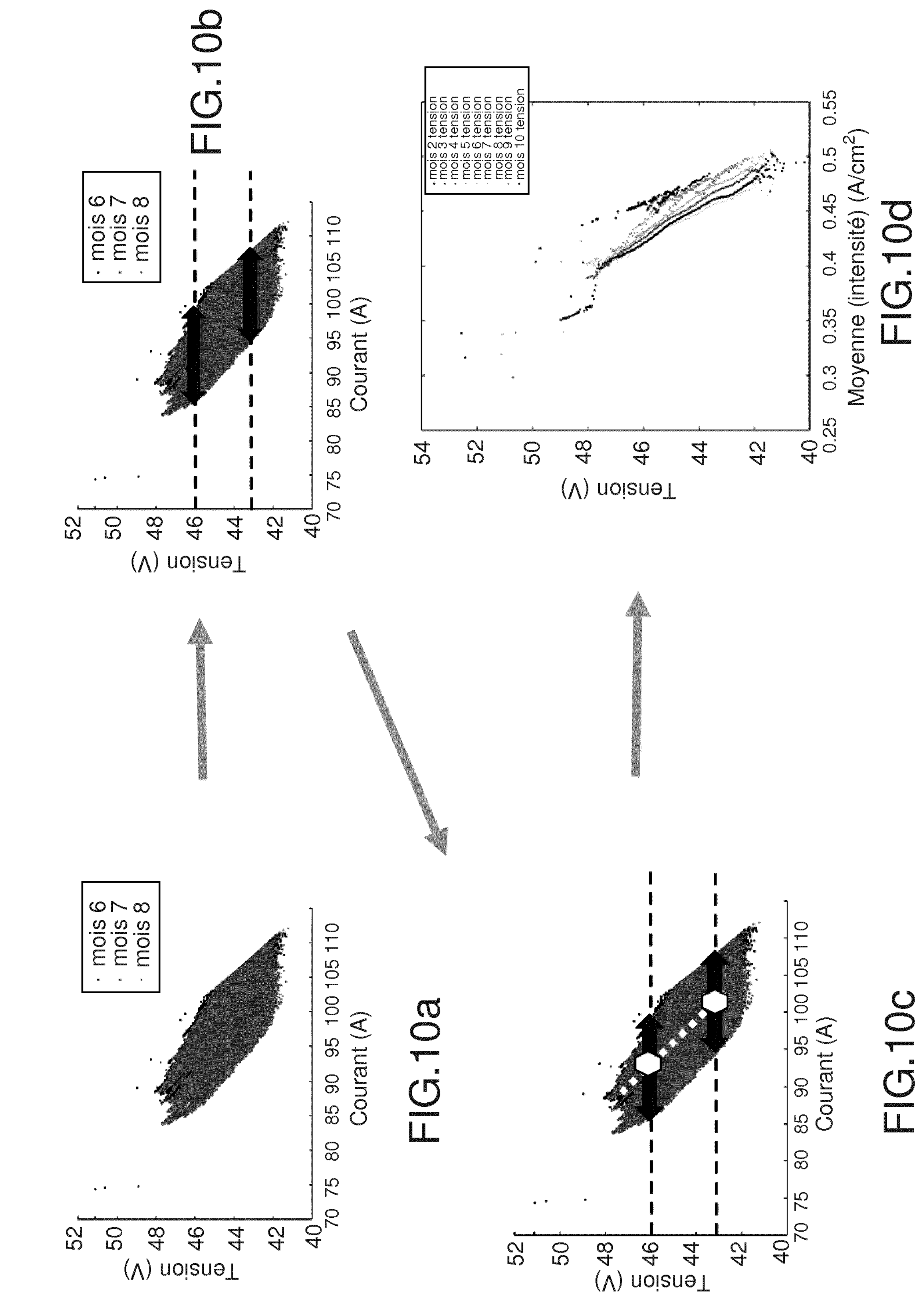


FIG.10a

FIG.10b

FIG.10c

FIG.10d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **BOUCHARA W.** PEMFC Durability Test under Specific Dynamic Current Solicitation, Linked to a Vehicle Road Cycle. *International Journal of Hydrogen Energy,* 2007, vol. 32 (17), 4523-e11
- **ONANENA R.** Fuel cells static and dynamic characterizations as tools for the estimation of their ageing time. *International Journal of Hydrogen Energy,* 2011, vol. 36 (2), 1730e9
- **GEOFFREY M.** The EM algorithm and extensions. John Wiley & Sons, 2007, 382
- **DIDIER D.** Probabilités et statistiques : problèmes à temps fixe. Masson, 1982
- **WAYNE L. WINSTON.** Introduction to mathematical programming. Thomson/Brooks/Cole Duxbury, 2003, vol. 1